# EUROPEAN PATENT SPECIFICATION

(11) **EP 2 959 138 B1**
(45) Date of publication and mention of the grant of the patent: **15.04.2020**
(21) Application number: 13707750.9
(22) Date of filing: 15.02.2013
(51) Int. Cl.: F02C 9/28, F02C 9/40

(54) **AUTOMATED TUNING OF MULTIPLE FUEL GAS TURBINE COMBUSTION SYSTEMS**
AUTOMATISIERTE EINSTELLUNG VON GASTURBINENVERBRENNUNGSSYSTEMEN MIT MEHREREN BRENNSTOFFEN
RÉGLAGE AUTOMATISÉ DE SYSTÈMES DE COMBUSTION DE TURBINE À GAZ À CARBURANTS MULTIPLES

(30) Priority: 22.02.2012 US 201261601871 P; 05.07.2012 US 201213542222
(43) Date of publication of application: 30.12.2015
(73) Proprietor: Gas Turbine Efficiency Sweden AB, 175 27 Järfälla (SE)
(72) Inventor: CHANDLER, Christopher, Austin, TX 78739 (US)
(74) Representative: Epping - Hermann - Fischer
(86) International application number: PCT/US2013/026291
(87) International publication number: WO 2013/126278

(56) References cited:
- EP-A2- 1 788 309
- EP-A2- 2 204 561
- EP-A2- 2 333 280
- US-A- 4 761 948
- US-A1- 2003 056 517
- US-A1- 2010 286 890

## Description

### Cross-Reference to Related Applications

This application is a continuation-in-part of US Application Serial No, 13/542,222, filed on July 5, 2012, which is a continuation-in-part of US Application Serial No. 12/463,060 filed on May 8, 2009. This application also claims the benefit of US Application Serial No. 61/601,871 , filed on February 22, 2012.

### Technical Field

The present disclosure relates to an automated system for sensing the operating condition of a combustion system and to making automated, preset adjustments to achieve desired operating conditions of the turbine. The present disclosure also relates to turbines operating using fuels having varying thermophysical properties.

### Background

Lean premixed combustion systems have been deployed on land based and marine fuel turbine engines to reduce emissions, such as NOx and CO. These systems have been successful and, in some cases, produce emission levels that are at the lower limits of measurement capabilities, approximately 1 to 3 parts per million (ppm) of NOx and CO. Although these systems are a great benefit from a standpoint of emission production, the operational envelope of the systems is substantially reduced when compared to more conventional combustion systems, As a consequence, the control of fuel conditions, distribution and injection into the combustion zones has become a critical operating parameter and requires frequent adjustment, when ambient atmospheric conditions, such as temperature, humidity and pressure, change. In addition to ambient condition changes, variation in the fuel's thermophysical properties will also change operational conditions leading to another source of variation that requires adjustment of the fuel turbine operational settings. The readjustment of the combustion fuel conditions, distribution and injection is termed tuning.

EP 2204561 discloses a system for blending secondary gases with a primary gas fuel and operating the gas turbine with the blended fuel mixture such that variations in fuel properties, including the Modified Wobbe Index, are within acceptable ranges for a typical low NOx emission combustion system.

EP 1788309 discloses methods and systems for operating a gas turbine engine system that includes a control system including a plurality of sensors configured to measure at least one parameter associated with the sensor, and can control a fuel split between the fuel injection points for example based on the Modified Wobbe Index of the fuel.

EP 2333280 discloses methods for controlling fuel mixing including identifying parameters associated with the operation of a machine configured to receive a combined fuel, determining a fuel flow of the combined fuel that is provided to the machine, and based at least in part on the identified parameters, determining a ration of a first fuel type included in the combined fuel to the determined fuel flow.

US 4761948 discloses systems for burning gaseous fuels including injecting high caloric value gaseous fuel through a first fuel supply passage of an injector and operating the engine to a pre-established engine operating parameter and subsequently mixing a low calorific value gaseous fuel in a mixing chamber outside the combustion chamber and injecting through the first fuel supply passage until a level of heating value of the mixed fuel or a second engine operating parameter has been reached.

US 2003/056517 discloses systems and methods for burning high quality fuel simultaneously with low quality fuel to eliminate instability in the combustion flame, including a sensor to monitor at least one parameter of the flame indicative of instability and a controller having the sensor signal as input to control the relative flow rates of the low quality and high quality fuels.

US 2010/286890 discloses systems and methods for tuning the operation of a gas turbine based at least in part on measuring operational parameters of the turbine and directing adjustment of operational controls for various operational elements of the turbine.

Controlled operation of a combustion system generally employs a manual setting of the operational control settings of a combustor to yield an average operational condition. These settings may be input through a controller, which as used herein shall refer to any device used to control the operation of a system. Examples include a Distributed Control System (DCS), a fuel turbine controller, a programmable logical controller (PLC), a stand-alone computer with communication to another controller and/or directly to a system.

These settings are satisfactory at the time of the setup, but conditions may change when tuning issues arise and cause an unacceptable operation in a matter of hours or days. Tuning issues are any situation whereby any operational parameters of a system are in excess of acceptable limits. Examples include emissions excursion outside of allowable limits, combustor dynamics excursion outside of allowable limits, or any other tuning event requiring adjustment of a turbine's operational control elements. Other approaches use a formula to predict emissions based on fuel turbine's operating settings and select a set point for fuel distribution and/or overall machine fuel/air ratio, without modifying other control elements, such as fuel temperature. These approaches do not allow for timely variation, do not take advantage of actual dynamics and emission data or do not modify fuel distribution, fuel temperature and/or other turbine operating parameters.

Another variable that impacts the lean premixed combustion system is fuel composition. Sufficient variation in fuel composition will cause a change in the heat release of the lean premixed combustion system. Such change may lead to emissions excursions, unstable combustion processes, or even blow out of the combustion system. Over the last twenty years, many economic and technological changes have occurred which have led to paradigm shifts in key operational inputs into fuel turbine combustion systems - namely fuel compositions requirements. One example of a fuel that is of considerable significance in this area is the use of liquefied natural gas (LNG).

LNG is becoming increasingly more prominent in the United States, Asia and South America. An inherent feature of LNG is variable gas composition as a "batch" of LNG is consumed. Since gas constituents with different volatilities (methane, ethane, propane, etc.) are vaporized at different rates (methane being one of the fastest to volatilize), methane concentrations typically continue to decrease as a "batch" of LNG is vaporized and subsequently consumed.

In addition, fuel producers are continually faced with economic and operational pressures to deliver "non-pipeline quality" fuel to their consumers. To this end, some suppliers have gone as far as to incentivize their customers to burn "off-spec" fuel by offering a reduction in the price per million BTU ($ / MMBTU). As used herein, the concept of multiple-fuel burning combustion turbines will be discussed in terms of "pipeline quality" and "non-pipeline quality" fuels. However, it should be understood that while these are common terms to refer to a primary fuel source and a secondary fuel source or sources, they are intended to merely define first and second fuel sources, which may all be of pipeline quality or may not contain any pipeline quality fuel. In many cases, the "pipeline quality" fuel may be more expensive than "non-pipeline quality" but this is not required.

On marine based equipment each refueling of liquid fuel is an opportunity for a change in its physical properties depending on the source and grade of the fuel. Such changes frequently impact emission levels of the gas combustion turbines and may also impact the base load points of the propulsion or power plant.

These above criteria have caused increased pressure on gas turbine operators to operate their equipment using "non-pipeline quality" fuel or non-standard distillate. However, consumption of large quantities of this "off-spec" fuel may have detrimental effects on the combustion turbine system.

In addition, mis-operation of the combustion system manifests itself in augmented pressure pulsations or an increase in combustion dynamics (hereinafter, combustion dynamics may be indicated by the symbol "δP"). Pulsations can have sufficient force to destroy the combustion system and dramatically reduce the life of combustion hardware. Additionally, improper tuning of the combustion system can lead to emission excursions and violate emission permits. Therefore, a means to maintain the stability of the lean premixed combustion systems, on a regular or periodic basis, within the proper operating envelope, is of great value and interest to the industry. Additionally, a system that operates by utilizing near real-time data, taken from the turbine sensors, would have significant value to coordinate modulation of fuel composition fuel distribution, fuel or distillate inlet temperature and/or overall machine fuel/air ratio.

While real-time tuning of a combustion system can provide tremendous operational flexibility and protection for turbine hardware, a combustion system may concurrently experience a number of different operational issues. For example, most turbine operators of lean premixed combustion systems are concerned with exhaust emissions (NOx and CO) as well as combustor dynamics. It is not uncommon for both high NOx emissions and high combustor dynamics to coexist on a turbine. Additionally, tuning in response to one concern can make other constraints worse, for example tuning for low NOx can make combustor dynamics worse, tuning for high CO can make NOx worse, etc. It would be beneficial to provide a system whereby an algorithm is used to compare the current status of all tuning concerns, rank each concern in order of importance, determine the operational concern of most interest, and subsequently commence automated tuning to remediate this dominant operational concern.

Since many operators are incentivized to consume as much of the less expensive "non-pipeline quality" fuel as possible while mixing the non-pipeline quality fuel with pipeline quality natural fuel (and sending the resultant mixture to their fuel turbine combustion system), a means of real-time optimization of the ratio of non-pipeline quality to pipeline quality fuel is also desired.

### Summary

The present disclosure includes a method for optimizing the ratio of non-pipeline quality to pipeline quality fuel or marine distillate (fuel blend ratio) for subsequent consumption in a fuel turbine consumption system of the comprising providing a first fuel source and a second fuel source as detailed in claim 1. The method further includes supplying fuel to a combustion turbine in a blend of fuel from the first source and second source. The method also includes sensing the operational parameters of the gas turbine and determining whether the operational parameters are within preset operational limits. Still further, the method includes adjusting the blend of the first fuel source and the second fuel source, based on whether the operational parameters are within the preset operational limits.

The present disclosure also includes a tuning system for automated control of a gas turbine fuel composition through automated modification of a ratio of fuel gas as detailed in claim 19. The tuning system comprises operational turbine controls for operational control elements of the turbine, the turbine controls controlling at least one of turbine fuel distribution or the fuel temperature. Further, the system includes a tuning controller communicating with the controls configured to tune the operation of the turbine in accordance with receiving operational data about the turbine, providing a hierarchy of tuning issues, determining whether sensed operational data is within predetermined operational limits and producing one or more indicators if said operational data is not within predetermined operational limits. The system further includes ranking the one or more indicators to determine dominant tuning concern. Still further, the system includes providing a blend of fuel to a level blend ratio controller, the blend having fuel from at least one of a first and second fuel source ratio controller, the fuel blend ratio controller adjusting the ratio of the first fuel source and the second fuel source according to the blend.

In a further aspect of the disclosure, the system performs a method for determination of the dominant fuel turbine combustion system tuning scenario through the use of Boolean hierarchical logic and multiple levels of control settings.

In another aspect of the disclosure, the method performed relates to automated control of the fuel turbine inlet fuel temperature through automated modification of the fuel temperature control set point within a Distributed Control System (DCS).

In a still further aspect of the disclosure, a method for automated control of a fuel turbine inlet fuel temperature is defined by automated modification of the fuel temperature control set point within the fuel temperature controller. In another aspect of the disclosure a method for communicating turbine control signals to a fuel turbine controller is accomplished through the use of an existing fuel turbine communication link with an external control device, such as, for example a MODBUS Serial or Ethernet communication protocol port existing on the turbine controller for communication with the Distributed Control System (DCS).

In a still further aspect of the disclosure a method for modification of a fuel turbine combustion system is defined by a series of auto tuning settings via a user interface display, which utilizes Boolean-logic toggle switches to select user-desired optimization criteria. The method is preferably defined by optimization criteria based on Optimum Combustion Dynamics, Optimum NOx Emissions, Optimum Power, Optimum Heat Rate, Optimum CO Emissions, Optimum Heat Recovery Steam Generator (HRSG) Life, Optimum Gas Turbine Fuel Blend Ratio or Optimal Gas Turbine Turndown Capability whereby toggling of this switch changes the magnitude of the combustor dynamics control setting(s).

In a still further aspect of the disclosure, and in conjunction with the control scheme outlined above, the controller can be directed to continuously maximize the non-pipeline quality fuel blend ratio. Conversely, if tuning issues arise, the tuning issues cannot be resolved by adjustments to the turbine parameters outlined above, the fuel blend ratio can be altered/reduced.

### Brief Description of Drawings

For the purpose of illustrating the disclosure, the drawings show forms that are presently preferred. It should be understood that the disclosure is not limited to the precise arrangements and instrumentalities shown in the drawings of the present disclosure.
Fig. 1 shows an exemplary embodiment of a schematic representation of an operational plant communication system encompassing the fuel turbine engine system and incorporating a fuel turbine tuning controller, utilizing a DCS as a central control hub.
Fig. 2 shows a schematic representation of an alternate embodiment of an operational plant communication system encompassing the fuel turbine engine system, incorporating a fuel turbine tuning controller, where the tuning controller is the central communication hub.
Fig. 3 shows a schematic representation of a further alternate embodiment of an operational plant communication system encompassing the fuel turbine engine system, incorporating a fuel turbine tuning controller, where the fuel turbine tuning controller is the central communication hub.
Fig. 4 shows an exemplary embodiment of a functional flow chart for the operation of a tuning controller according to the present disclosure.
Fig. 5 shows an exemplary embodiment of a user interface display for selecting the optimization mode within the present disclosure.
Fig. 6 shows an exemplary schematic of the inter-relationship of various optimization mode settings.
Fig. 7 shows an exemplary overview schematic of the process steps utilized to determine the alarm signals triggered according to the present disclosure.
Fig. 8 shows an exemplary process overview of the steps to determine allowable turbine tuning parameters.
Fig. 9 shows a further detailed exemplary process according to the steps shown in Fig. 8.
Fig. 10 shows a detailed exemplary schematic of steps utilized to determine the dominant tuning concern according to the present disclosure.
Fig. 11 shows a first example schematic of the determination of the system's dominant tuning concern, given various alarm inputs into the present disclosure.
Fig. 12 shows a second example schematic of the determination of the system's dominant tuning concern, given various alarm inputs into the present disclosure.
Fig. 13 shows a third example schematic of the determination of the system's dominant tuning concern, given various alarm inputs into the present disclosure.
Fig. 14 shows a fourth example schematic of the determination of the system's dominant tuning concern, given various alarm inputs into the present disclosure.
Fig. 15 shows a fourth example schematic of the determination of the system's dominant tuning concern, given various alarm inputs into the present disclosure.
Fig. 16 shows a first operational example of operational tuning of a fuel turbine engine system as contemplated by the present disclosure.
Fig. 17 shows a second operational example of operational tuning of a fuel turbine engine system as contemplated by the present disclosure.
Fig. 18 shows a third operational example of operational tuning of a fuel turbine engine system as contemplated by the present disclosure.
Fig. 19 shows a fourth operational example of operational tuning of a fuel turbine engine system as contemplated by the present disclosure.
Fig. 20 shows a first exemplary schematic representation of the function of the tuning controller of the present disclosure in maintaining the tuning of the turbine system.
Fig. 21 shows a second exemplary schematic representation of the function of the tuning controller of the present disclosure in maintaining the tuning of the turbine system.

### Detailed Description

The present disclosure generally relates to systems and methods for tuning the operation of combustion turbines. In the depicted embodiments, the systems and methods relate to automatic tuning of combustion turbines, such as those used for power generation. Persons of ordinary skill in the art will appreciate that the teachings herein can be readily adapted to other types of combustion turbines. Accordingly, the terms used herein are not intended to be limiting of the embodiments of the present invention. Instead, it will be understood that the embodiments of the present disclosure relate generally to the field of combustion turbines, and in particular for systems, methods and computer readable media for tuning of combustion turbines.

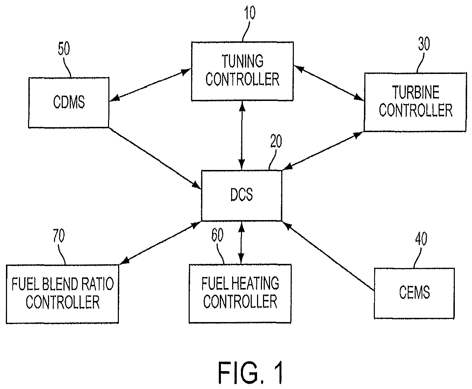

Fig. 1 is a communication diagram for a gas combustion turbine engine (not shown), within which a tuning controller 10 of the present disclosure operates. A communication link or hub is provided to direct communication between various elements of the turbine system. As shown, a communication link is a Distributed Control System (DCS) identified by the numeral 20, and provides a link to the various elements of the system. However, the operational elements of the turbine may be linked directly to each other, without the need for a DCS. Most of the turbine control is performed through the DCS 20. A turbine controller 30 communicates directly with the turbine (as shown) and with the DCS 20. In the present disclosure, information relevant to turbine operation, e.g., turbine dynamics, turbine exhaust emissions, etc. is directed through the DCS 20 to other elements of the system, such as the tuning controller 10. The tuning controller 10 is contemplated to be a stand-alone PC used to run as a programmable logical controller (PLC). In the present disclosure, information relevant to turbine operation is directed through the tuning controller 10. This relevant information is also referred to as the turbine's operational parameters, which are parameters that are measured, by way of various types and number of sensors, to indicate operational status of various aspects of the turbine. These parameters can be fed as inputs into the autotuning controller. Examples of operation parameters include combustor dynamics, turbine exhaust emissions, and tubing exhaust temperature, which is generally influenced by the overall fuel/air ratio of the turbine.

Referring now to Figs. 1, 2, and 3, the tuning controller 10 is preferably a separate computer from the turbine controller 30 that is in constant communication with the turbine controller 30, either directly or through the DCS 20. The signals from the tuning controller 10 may be transferred to the turbine controller 30 or other controls within the system by the use of an external control device, such as a MODBUS Serial or Ethernet communication protocol port existing on or added to the system. In an alternate configuration, the tuning controller 10 may be embedded in the turbine control system should a plant configuration not include a DCS system and use the controller as a distributed control system.

The relevant operational parameters are received from sensor means associated with the turbine. For example, the turbine exhaust emission reading is taken from stack emissions by a continuous emissions monitoring system (CEMS) 40, and sent to the tuning controller 10 and/or the turbine controller 30. Combustion dynamics are sensed using a dynamic pressure sensing probe located within the combustion region of the turbine combustor. As shown, a continuous dynamics monitoring system (CDMS) 50 is provided and communicates with the DCS 20 and controller 60. The CDMS 50 preferably uses either direct mounted or wave guide connected pressure or light sensing probes to measure the combustion dynamics. Another relevant operational parameter is the fuel temperature, which is sensed at the fuel heating controller 60. The fuel temperature information is directed to the tuning controller 10 through the DCS 20 from the fuel heating controller 60. Since part of the tuning operation may include adjustment of the fuel temperature, there may be a two-way communication between the tuning controller 10 and/or turbine controller 30 from the fuel heating unit 60, via the DCS 20. The DCS 20 also communicates with a fuel blend ratio controller 70 to adjust the ratio of pipeline quality fuel to non-pipeline quality fuel (for subsequent consumption within the turbine). The system may also be used to adjust blends of other fuels for turbines that are operating on liquid fuels, such as a turbine in a marine application or distillate fired power generation application. There exists, as part of this disclosure, communication between the fuel blend ratio controller 70 and the tuning controller 10, via the DCS 20. For purposes of this disclosure, "pipeline quality" and "non-pipeline quality" fuel or fuel shall be used to refer to first and second types of fuels having different characteristics, such as price, level of refinement or other characteristics that may influence the decision to prefer one fuel over the other fuel.

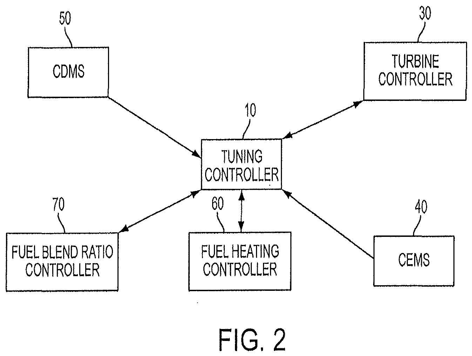

Fig. 2 shows a communication diagram of an alternate embodiment of a system that is similar to Fig. 1, with the exception that the DCS 20 is removed from the communication network. In this setup, the tuning controller 10 communicates directly with all other devices/controllers (30, 40, 50, 60 and/or 70). For purposes of the present application, the tuning process will be described with the communication layout as determined in Fig. 1; however, the below-described tuning process can also be applied to the communication schematic identified in Fig. 2.

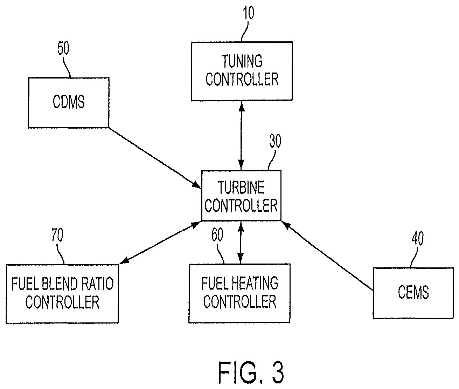

Fig. 3 shows a communication diagram of a second alternate embodiment of a system that is similar to Fig. 2, except that the DCS 20 is removed from the communication network. In this setup, the turbine controller 30 communicates directly with all over devices/controllers (10, 40, 50, 60 and/or 70). For purposes of the present application, the tuning process will be described with the communication layout as determined in Fig. 1; however, the below-described tuning process can also be applied to the communication schematic identified in Fig. 3.

Relevant operational data from the turbine may be collected at least several times per minute. This frequency of data collection allows for near real-time system tuning. Most relevant turbine operational data is collected by the tuning controller in near real-time. However, the turbine exhaust emissions data is typically received from the CEMS 40 by the tuning controller 10 with a 2 to 8 minute time lag from current operating conditions. This time lag necessitates the need for the tuning controller 10 to receive and buffer relevant information, for a similar time lag, before making operational tuning adjustments. This tuning controller 10 tuning adjustment time lag assures that all of the operational (including exhaust emissions) data is representative of a stable turbine operation before and after any adjustments are made. Once the data is deemed stable, the tuning controller 10 determines whether there is a need for adjustment of operational control elements to bring the tuning parameters into acceptable ranges. The procedure for determining whether any tuning adjustments are necessary will be described in further detail below. If no adjustment is necessary, the tuning controller 10 maintains the current tuning and waits to receive the next data set. If changes are desired, tuning commences.

In a situation where there are no tuning adjustments necessary to correct operating conditions if the turbine, and if there is sufficient margin in the key operational characteristics of the turbine (e.g. exhaust emissions and combustor dynamics), the tuning controller 10 can send a command directly to the fuel ratio controller 70 as shown in Fig. 2, or alternatively, to the fuel ratio controller 70 through the DCS 20 as shown in Fig. 1, to increase the ratio of non-pipeline quality fuel to pipeline quality fuel or alternative fuels such as distillate. As used herein, control elements or operational control elements are control inputs that can be manipulated by the tuning controller 10 to produce a change in the operational parameters of a turbine. These elements can either reside with the turbine controller 10, within the plant distributed control system (DCS), or within an external controller that controls the properties of inputs into the turbine (such as fuel temperature). Examples of operational control elements include combustor fuel splits, turbine fuel/air ratio, and inlet temperature.

All determinations of the need for turbine tuning are performed within the tuning controller 10. The tuning operation is started based on an indicator, such as an "alarm" condition that is created by receipt of operational parameter data outside of acceptable limits of preset operational criteria. In order for the tuning operation to be initiated, the alarm - and thus the operational parameter data anomaly - must continue for a predetermined period of time.

One example of a tuning adjustment is the variation of the fuel nozzle pressure ratio to adjust combustion dynamics. With the requirement of higher firing temperatures to achieve greater flame temperatures and efficiency, turbine combustors must release more energy in a given combustor volume. Better exhaust emissions are often achieved by increasing the mixing rate of fuel and air upstream of the combustion reaction zone. The increased mixing rate is often achieved by increasing the pressure drop at the fuel nozzle discharge. As the mixing rate increases in combustors, the turbulence generated by combustion often leads to noise within the combustor and may lead to the generation of acoustic waves. Typically, acoustic waves are caused when the sound waves of the combustion flames are coupled with the acoustic characteristics of the combustor volume or the fuel system itself.

Acoustic waves may affect the internal pressure in the chamber. Where combustor pressure inside a combustion chamber, near a fuel nozzle rises, the rate of fuel flowing through the nozzle and the accompanying pressure drop decreases. Alternatively, a decrease in pressure near the nozzle will cause an increase in fuel flow. In cases where a fuel nozzle pressure drop allows fuel flow oscillation, a combustor may experience amplified pressure oscillations. To combat the pressure oscillations within the combustor, combustion dynamics are monitored and the fuel air ratio and fuel nozzle pressure ratio may be modified to reduce or eliminate unwanted variations in combustor pressure, thereby curing an alarm situation or bringing the combustion system back to an acceptable level of combustion dynamics.

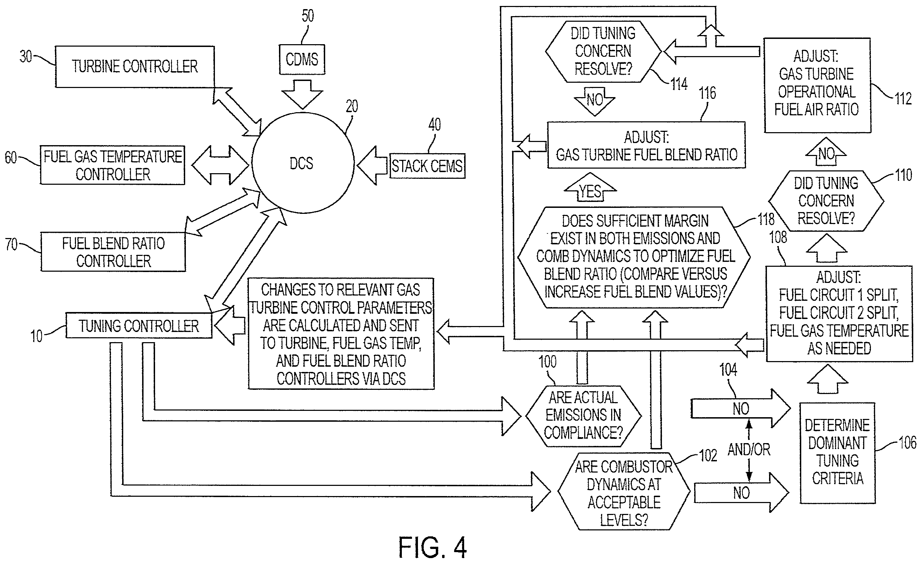

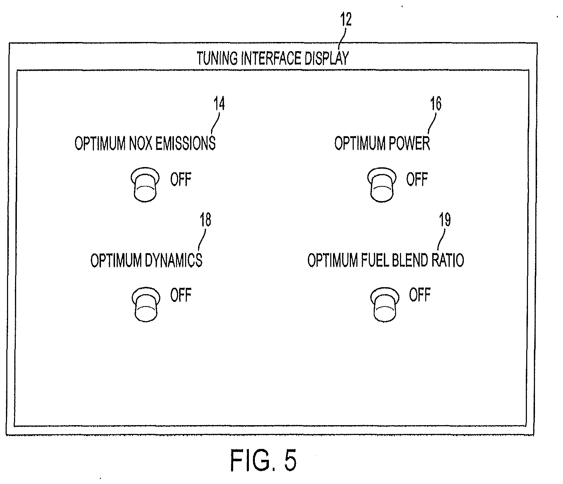

As shown in Fig. 4, the data received from the CDMS 50, CEMS 40, fuel temperature controller 60 and other relevant turbine operating parameters from the turbine controller 30 may be directed through the DCS 20 to the tuning controller 10. These input values are then compared to standard or target operational data for the turbine. The stored operational standards are based, at least in part, on the operational priority settings for the turbine in the form of tuning alarm levels, as will be described in more detail below. The priority settings are defined by user selected inputs on the main user interface 12 of the tuning controller 10, as shown graphically in Fig. 5. Based on the priority settings, a series of adjustments are made to the operation of the turbine by the turbine controller 10 connected through the DCS 20. The adjustments are directed to the control means, including the fuel heating unit 60, fuel blend ratio controller 70, and various other operational elements of the turbine controller 30.

In addition to adjusting the tuning parameters described above, the turbine controller will also determine if there is sufficient margin amongst the operational standards to adjust the fuel blend ratio. Typically, as described in further detail below, the amount of non-pipeline quality fuel will be increased if the system is found to be well within the tuning limits, and the amount of pipeline quality fuel will be increased if tuning alarms are activated.

The interface display 12 shown in Fig. 5 is the main user interface display that end users will operate to determine tuning alarm levels. The interface 12 is comprised of switches (each having an On/Off indication). These switches allow the user to specify the desired tuning priorities for the operation of the turbine. In the embodiment shown, the switched operational priorities include optimum NOx emissions 14, optimum power 16, optimum combustor dynamics 18, and optimum fuel blend ratio 19. Each of these switches is set by the user to adjust the preferred operation of the turbine. Switching the switches from "Off' to "On" operates to change the alarm limits for each parameter. Within the tuning controller 10 are functions that modify operations within the turbine, based on priorities set by the switches. The priorities may also be governed logic implemented thorough hardware configured to perform the necessary logic operations in addition to user selected priorities. For example, in the embodiment described here, if both the optimum NOx emissions switch 14 and the optimum power switch 16 are set to "On", the controller 10 will run in the optimum NOx mode, not optimum power. Thus, to run in optimum power mode, the optimum NOx emissions switch 14 must be "Off'. In the embodiment shown, optimum power 16 may only be selected if optimum NOx 14 is in the off position. Optimum dynamics 18 can be selected at any time. The optimum fuel blend ratio 19 switch may be "On" when any of the switches are "On" and will overlay other operational parameters. It is explicitly noted that other User-Interface Toggle Switches (not shown) may be used, including parameters such as Optimum Heat Rate, Optimum CO emissions, Optimum Heat Recovery Steam Generator (HRSG) Life, Optimal Gas Turbine Turndown Capability, etc.

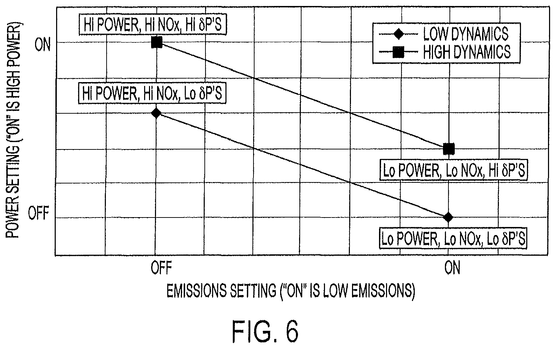

Fig. 6 shows a graphical representation of the interrelationship of the interface display switches. As shown, switching one parameter "On" will alter the alarm limits to a different level than their "Off" level. In the example shown in Fig. 6, the alarm limits are shown with both Optimum NOx and optimum power in the "On" position and in the "Off" position. These points on the graph are then modified by the selection of optimum dynamics (represented throughout by the symbol δ) in either the "On" or "Off" position. The points shown on the graph of Fig. 6 represent an exemplary set of limits for dynamics, based on the user's selected operational priorities.

Activating the Optimum Fuel Blend Ratio switch 19 of Fig. 4 will not affect the overall tuning parameters of the controller. Rather, activating the Optimum Fuel Blend Ratio switch 19 will overlay as second set of allowable limits upon the limits imparted by the other switches 14, 16, 18. The second set of limits is based on the existing limits set by Optimum NOx, Power and Dynamics, but provides for an operational envelope within these limits. If the turbine is operating within the limits set by activating the Optimum Fuel Blend Ratio switch 19, the controller 10 will adjust the fuel blend ratio to increase the amount of non-pipeline quality fuel. Conversely, if the turbine is operating outside of the limits set by activating the Optimum Fuel Blend Ratio switch 19, the controller will adjust the fuel blend ratio to increase the amount of pipeline quality fuel. Adjustments to the fuel blend ratio are done during the normal tuning progression described with respect to Fig. 4.

Fig. 4, shows a representation of the logical flow of the determinations and calculations made within the tuning controller 10. The tuning controller 10 receives the actual operating parameters of the turbine through the turbine controller 30, combustor dynamics through the CDMS 50, and the turbine exhaust emissions through the CEMS 40. This sensor data is directed to the tuning controller 10, either directly from the elements 40, 50 and 60 mentioned above, or through the DCS 20. The received sensor data is compared to stored operational standards to determine if the turbine operation is conforming to the desired settings. The operational standards are stored in the tuning controller 10 in the form of alarm levels, where normal operation of the turbine will return operational data for each parameter that is between the high and low alarm levels set for that parameter. The alarm levels for the operational standards are based on the preset operational priorities of the turbine, defined by the user switches 14, 16, 18, 19 on the main user interface display 12 of the tuning controller 10, as discussed above with respect to Fig. 5.

Based on the preset operational priorities, a hard-coded hierarchical Boolean logic approach that is coded into the tuning controller 10 determines the dominant tuning criteria based on operational priorities. From this logical selection, the tuning controller 10 implements a fixed incremental adjustment value for changing an operational parameter of the turbine within a maximum range of adjustment (e.g., high and low values). The tuning changes are made in a consistent, pre-determined direction over a pre-determined increment of time and are dependent on the dominant tuning criteria at the time. It is contemplated that no instant formulaic or functional calculations are made to determine the direction, magnitude and spacing of tuning adjustments; rather, the magnitude of the incremental adjustments, the direction of the adjustments, the time span between adjustments, and the maximum range for the adjustments for each control element are stored in the tuning controller 10 and selected based on the alarm returned and user's operational priorities. This criteria is preferably stored in the tuning controller 10 as tuning control constrains and may be modified from time to time as desired by the user.

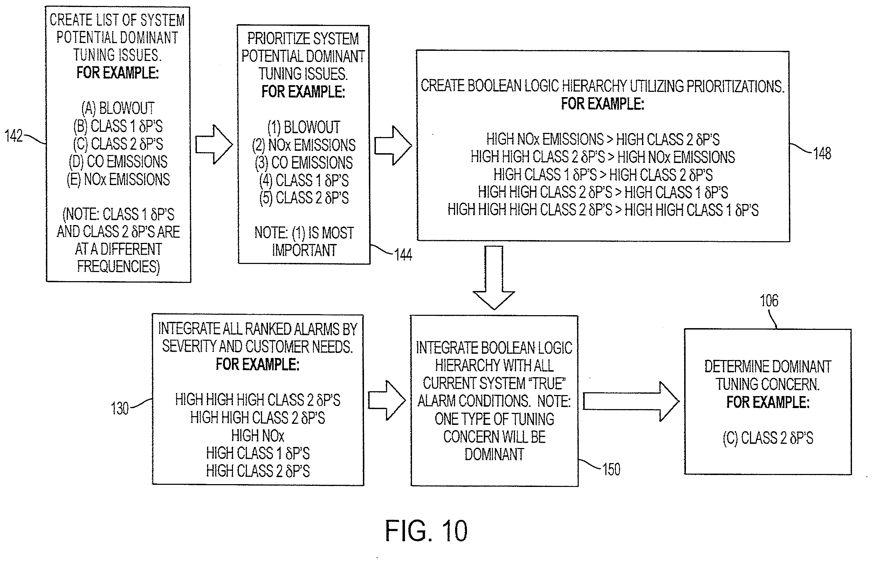

As shown in Fig. 4, the tuning controller 10 determines whether the emissions are in compliance 100 and whether the combustor dynamics are at acceptable levels 102 by comparing the operating parameters received from the CDMS 50 and CEMS 40 respectively, to the operational standards and alarm levels saved in the tuning controller 10 as discussed above. If both are in compliance with the set operational standards, no further corrective action is taken and the tuning controller 10 waits for the next data set from the CEMS 40 or the CDMS 50, or for other operational data from the turbine controller 30. If the data received from the CEMS 40 or the CDMS 50 is non-conforming with the operational standards, i.e. above or below alarm levels as is the case with step 104 of Fig. 2, the tuning operation moves to the next tuning step of first determining the dominant tuning concern 106. The logical adjustment of turbine operation is defined by the dominant tuning criteria 106, which is based, at least in part, on the preset operational priorities set within the user interface 12, as will be discussed below with respect to Fig. 10.

Once the dominant tuning concern is determined, the tuning controller 10 will attempt to correct the operational parameter to ensure that the levels are within the operational standards stored in the tuning controller 10. In a preferred operation, to correct a tuning issue, the tuning controller 10 will first attempt to incrementally change the turbine combustor fuel splits 108. For a machine fueled with liquid fuel, fuel splits are substituted by atomizing air pressure regulation and fuel flow. The fuel split determines the distribution of the fuel flow to the fuel nozzles in each combustor. If adjusting the fuel splits 108 does not resolve the tuning issue and place the operational parameters data back into conformance with the operational standards, a further adjustment to an operational control element is performed. In the example shown, the next incremental adjustment may be a change of the fuel temperature set point. In this adjustment step, the tuning controller 10 sends a modified fuel inlet temperature signal to the DCS 20, which is directed to the fuel heating unit 60.

After the incremental steps are taken in step 108, a check at step 110, is made to see if modification of the combustor fuel splits and/or fuel inlet temperature resolved the tuning issue. If further tuning corrections are needed, the tuning controller 10 will then alter the overall fuel/air ratio 112. This approach makes changes to the turbine thermal cycle utilizing fixed incremental changes over pre-determined amounts of time. This step of modifying the fuel/air ration 112 is intended to adjust the exhaust temperature (up or down) by adjusting the air to fuel ratio in accordance with predetermined, standard control curves for the turbine operation, which are maintained within the memory of the tuning controller 10.

If changes made to the turbine's overall fuel/air ratio do not resolve the tuning issue 114, the tuning controller 10 will adjust the fuel blend ratio 116. Typically, if an alarm condition requires tuning, the amount of pipeline quality fuel will be increased incrementally in relation to the amount of non-pipeline quality fuel.

Additionally, if there is sufficient margin 118 in the turbine's key operational parameters and the Optimum Fuel Blend Ratio toggle switch 19 is "On", the tuning controller 10 will send a command to the fuel blend ratio controller 70 to increase the ratio of non-pipeline quality fuel to pipeline quality fuel. The margin 118 for determining whether a fuel blend adjustment may be made, or is necessary, is determined based on the other operational parameters of the system, such as NOx, dynamics or power. In a preferred embodiment, the margin 118 represents a buffer or second set of limits within the operational envelope that is determined for other operational parameters of the system, such as NOx, dynamics or power. Thus, if the operating state of the system is within this second set of limits, the fuel blend ratio controller 70 will adjust the fuel blend ratio 116 to increase the amount of non-pipeline quality fuel. Conversely, if the system is outside of allowable limits, the ratio of pipeline quality fuel will be increased. In a situation where non-pipeline quality fuel is being fed to the turbine and tuning event occurs due to an alarm such as from NOx, high or low dynamics or power, the ratio of non-pipeline quality fuel may be lowered, or other parameters may be adjusted, depending on the type of alarm and user's operational preferences.

In the present disclosure, the normal mode of communication provides tuning changes utilizing control signals intended for a given control element that are directed by the tuning controller 10 that are fed to the turbine controller 30 fuel temperature controller 60, and / or fuel blend ratio controller 70 through the DCS 20. However, the control signals can also be communicated directly to the turbine controller 30, etc. without use of the DCS 20. These adjustments are implemented directly within the various controller means within the system or through the turbine controller 30. When the operational data is returned to the desired operational standards, the tuning settings are held in place by the tuning controller 10 pending an alarm resulting from non-conforming data received from the sensor means 40, 50, 60.

The incremental adjustments sent from the tuning controller 10 to the turbine controller 30 or the associated controller means (30, 60, 70) are preferably fixed in magnitude. Thus, the adjustments are not recalculated with new data or optimized to a modeled value or target. The adjustments are part of an "open loop," which is bounded by the preselected operational boundaries. Once started, the adjustments move incrementally to the preset maximum or maximum within a specified range, unless an interim adjustment places the operation data into conformance with the operational standards. Under most circumstances, when the full incremental range of available adjustments for one operational control element is completed, the tuning controller 10 moves on to the next operational control element, which is defined by the preset operational priorities. The logic of the tuning controller 10 drives the adjustment of operational control elements on a step-by-step basis, where the incremental steps of adjustment for each control element are stored within the memory of the tuning controller 10.

The tuning controller 10 preferably addresses one operational control element at a time. For example, the dominant tuning criteria 106 dictates the first adjustment to be made. The order of which operational control elements are to be adjusted is not fixed and will vary based on operating parameters and inputs such as the dominant tuning criteria 106. In the preferred example discussed above, the fuel distribution/split control element is first adjusted in step 108. As indicated in Fig. 4, during this step, the fuel split of fuel circuit 1 - the center nozzle in the combustor - is first addressed, followed by the split for fuel circuit 2 - the outer nozzles in the combustor. This system can also be applicable to other combustion turbine configurations that do not include a center nozzle in a can annular configuration, but do contain a number of fuel circuits. Similarly, this system can be applied to an annular combustion configuration with more than one fuel circuit or a liquid fuel system with a single fuel circuit and the ability to vary the fuel to air ratio.

It should be noted that the application of fuel circuits 1 and 2 is general in nature and can be applied to the specific hardware configuration within any particular combustion system. Therefore, this tuning approach is applicable to any combustion system with multiple fuel sources, regardless if it has only one fuel split, two fuel splits, more than two fuel splits, or no fuel splits. If the combustion system has only one useful fuel split, then this second tuning step or adjusting fuel circuit 2 is left within the tuning algorithm; but, abandoned in-place. If the combustion system has more than 2 fuel splits, then the 2 most effective fuel split "knobs" are utilized. If the combustion system has no fuel circuits but does have multiple fuel sources where the amount of fuel from each source can be controlled

The fuel gas inlet temperature adjustment generally follows the fuel split adjustments when needed. Within each step, there is an incremental adjustment, followed by a time lag to permit the adjusted turbine operation to stabilize. After the time lag, if the current operational data analyzed by the tuning controller 10 indicates that turbine operation still remains outside of the operational standards, the next incremental adjustment within the step is made. This pattern repeats for each step. Under most circumstances, only when one adjustment step is completed does the tuning controller move onto the next operational control elements.

The inlet temperature adjustment generally follows the fuel split adjustments when needed. Within each step, there is an incremental adjustment, followed by a time lag to permit the adjusted turbine operation to stabilize. After the time lag, if the current operational data analyzed by the tuning controller 10 indicates that turbine operation still remains outside of the operational standards, the next incremental adjustment is made. This pattern repeats for each step. Under most circumstances, only when one adjustment step is completed does the tuning controller move onto the next operational control element. As mentioned above, there exists an over-riding loop whereby the tuning controller 10 will directly increase the non-pipeline quality fuel blend ratio (through the fuel blend ratio controller 70) if key turbine operational characteristics possess ample operational margin (against alarm conditions) 118. The control methodology of this over-riding control loop is identical to that mentioned above for fuel splits and turbine fuel air ratio - a change is made in a pre-defined direction, a pre-defined amount, in a pre-defined amount of time. Analogously, a liquid fueled machine can adjust the ratio of two fuel streams with differing thermophysical properties or optimize for one fuel source or a lower or higher fuel source for a prolonged operating period.

The tuning controller 10 preferably controls combustion operation to maintain proper tuning in variable conditions of ambient temperature, humidity and pressure, all of which vary over time and have a significant effect on turbine operation. The tuning controller 10 may also maintain the tuning of the turbine during variation in fuel composition. Variation in fuel composition may cause a change in the heat release, which can lead to unacceptable emissions, unstable combustion, or even blow out. In this event, the tuning controller 10 will adjust fuel composition entering the turbine indirectly through changes in the fuel blend ratio 116. The tuning controller may also serve to supplement this adjustment in fuel composition to tune operational control elements (such as fuel distribution, fuel inlet temperature, and/or turbine fuel/air ratio) to address the effects on combustion output and discharge. In each case, if the Optimum Fuel Blend Ratio switch 19 is "On" and the variation of conditions leads the operation of the turbine to be within the operational limits, the amount of non-pipeline quality fuel will be increased in relation to the amount of pipeline quality fuel. Conversely, if variations in operational conditions leads to the turbine operating outside of the preset limits, or an alarm condition occurring, the ratio of pipeline quality fuel will be increased.

In other tuning scenarios, an alternate order for the adjustments is contemplated. For example, if the dominant operational priority is optimum NOx emissions (such as selected using switch 14 of Fig. 2), the fuel temperature adjustment may be skipped, going directly to the operational control curves to adjust fuel/air ratio. If, however, dynamics is the operational priority (and the optimum NOx emission switch 14 is "Off"), the incremental fuel temperature adjustment may be performed before going to the operational control curves. Alternatively, the step of making adjustments to control elements in accordance with the operational fuel air ratio control curves may be turned off completely, based on a user's priorities.

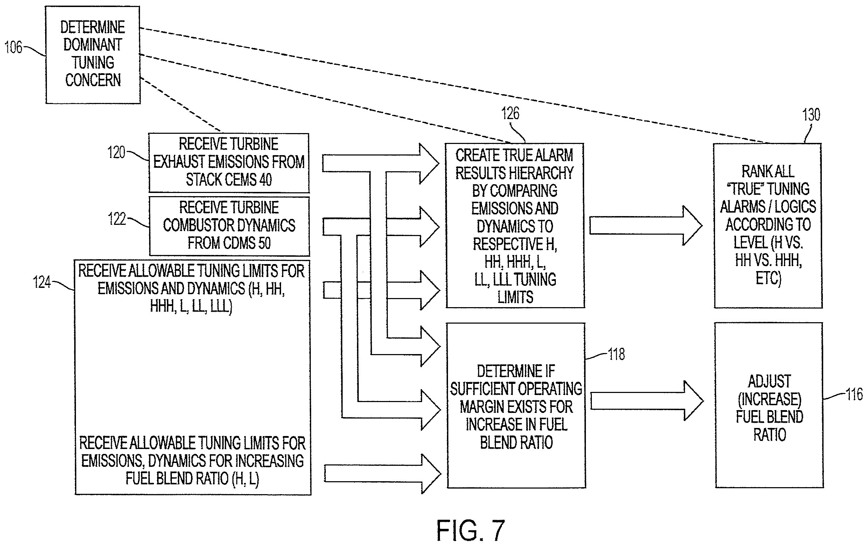

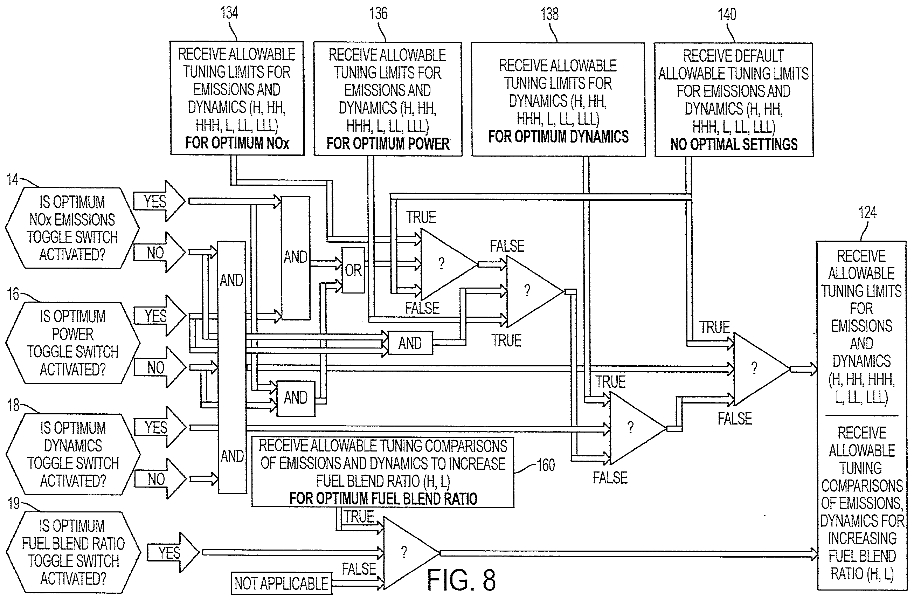

Fig. 7 provides a schematic that details the framework for determining the dominant tuning concern 106, as included in Fig. 4. Future steps will be described below with respect to Fig. 8. First, relevant emissions parameters 120 and combustor dynamics 122 are received by the tuning controller 10 from the CEMS 40 and CDMS 50, as detailed above. The relevant emissions parameters 120 and combustor dynamics 122 are then compared to allowable tuning limits 124 that are also provided to the tuning controller 10. The allowable tuning limits are in the form of preset ranges that may be adjusted using the tuning interface 12 of Fig. 3 and determined according to the logic set forth below with respect to Figs. 6 and 7. The output of this comparison is a series of "True" alarms 126 of various tuning concerns, where an alarm condition is indicated if the sensed operational data 120, 122 is above or below a given alarm range set forth in the tuning limits 124. In the event that Optimum Fuel Blend Ratio switch 19 is "On," the allowable tuning limits for emissions, dynamics and power will also be provided as part of step 124. Likewise, a "True" condition will exist if sufficient operating margin exists for increasing the fuel blend ratio, as shown in step 118. The fuel blend ratio will be adjusted in step 116 as part of the tuning process shown in Fig. 4.

Alarm conditions may have more than one level or tier. For example, there may be varying degrees of severity of an alarm, such as: high "H"; high-high "HH"; high-high-high "HHH" and low "L"; low-low "L"; low-low-low "LLL". The "True" logical alarms 126 are subsequently ranked according to their level of importance (e.g. high - high "HH" alarms are more important than high "H" alarms, etc.) in step 130. If more than one tuning concern shares the same level, the tuning concerns will then be ranked according to the user preferences as set forth below with respect to Fig. 10. If only one "True" alarm emerges, this will be selected and used as the dominant tuning concern 106 to initiate the tuning process as set forth in Fig. 2. However, the results of the process of Fig. 7, namely the ranked "True" alarms 130, will be processed through user determined criteria, as shown in Fig. 8, before a dominant tuning concern 106 is confirmed.

In Fig. 8, a flow chart is provided to explain how the allowable tuning limits 124 are determined. Once determined, the tuning limits 124 are compared to the operational data 120, 122 as set forth above and shown in Fig. 7. First, the User Interface Toggle Switches 14, 16, 18, 19 corresponding to those in the interface display 12 of Fig. 5, are compared against each other, utilizing an internal hierarchy to allow passage of the alarm constraints relative to the most significant toggle switch. Thus, depending on which switches are in the "On" position, different tuning limits will be included in the allowable tuning limits 124. Each of Optimum NOx, Optimum Power and Optimum Dynamics has a collection of preset limits (denoted by the numerals 134, 136 and 138 in Fig. 8), depending on whether the corresponding toggle switch 14, 16, 18, 19 is in the "On" of "Off" position. There is also an internal set of default limits 140 to be used when none of the toggle switches are in the "On" position.

The internal hierarchy will determine which tuning limits shall take precedence in the event that competing toggle switches 14, 16 18, or 19 are in the "On" position. In the present example, the hierarchy ranks Optimum NOx above Optimum Power. Optimum Dynamics may be selected at any time and will simply alter the tuning limits of the other selections given, such as is shown in Fig. 4. If Optimum NOx 14 and Optimum Power 16 are both in the "On" position, the tuning limits for Optimum NOx 134 will be used. Additionally, the tuning limits for Optimum Dynamics 138 are utilized if this toggle switch 18 is activated. If no User Interface Toggle Switches 14, 16, 18, 19 are active, default tuning limits 140 are provided as the allowable tuning limits 124. All of the tuning limits 134, 136, 138 and 140 that may be used to construct the allowable tuning limits for the tuning controller 10 may be developed by the end user and programmers and are then preferably hard coded into the tuning controller 10 for a given application. The methodology outlined in Fig. 7 is meant to provide an exemplary framework for incorporation of a number of different User Interface Toggle Switches, such as those options set forth above with respect to Fig. 5, whereby only a subset are specifically outlined in this disclosure.

The allowable tuning limits for determining whether an increase in fuel blend ratio is allowable will be based on the selected tuning limits based on other operational parameters of the system, such as NOx, dynamics or power. Thus, depending on what the limits are for the other parameters, fuel blend tuning limits 160 will be established and compared to the operating conditions of the turbine to determine if a fuel blend ratio adjustment is called for.

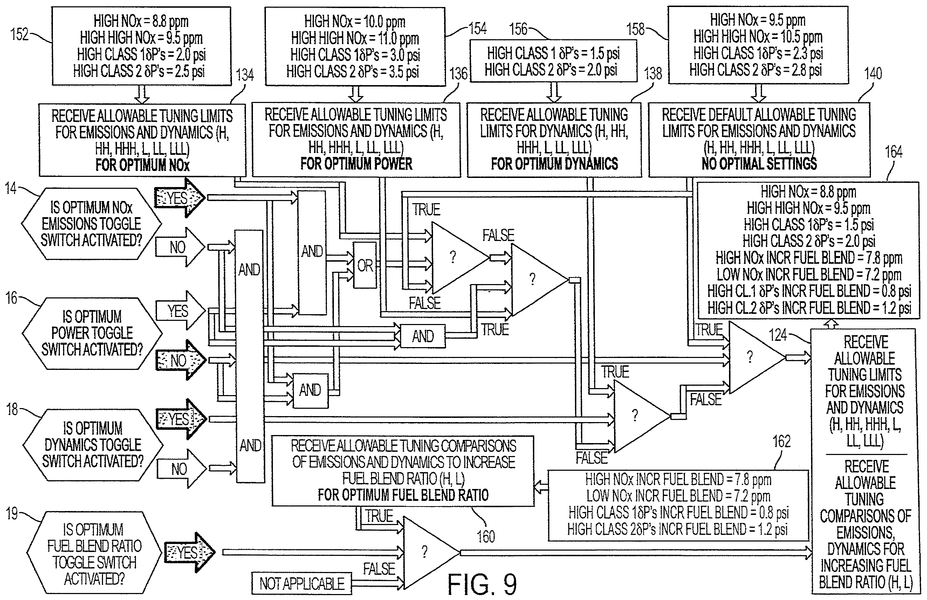

Fig. 9 shows a specific example of the flow chart of Fig. 7 is given for the determination of a subset of the system's allowable tuning limits. In this example, the tuning limits for High NOx, High High NOx, High Class 1 δP's, High Class 2 δP's will be determined based on preset tuning limits and the user's preferences. The various exemplary tuning limits are provided for Optimum NOx 134, Optimum Power 136, Optimum Dynamics 138, and No Optimal Settings 140 are given corresponding numerical values (shown respectively in blocks 152, 154, 156 and 158). The corresponding numerical values given for each criterion vary, such that the allowable limits 124 will be different depending on which toggle switches 14, 16 18, or 19 are selected. By way of example, the Optimum NOx 134, 152 and Optimum Power 136, 154 give limits for NOx, but also provide limits for Dynamics that are to be used in the event that Optimum Dynamics 138, 156 is not selected. However, in the event that the Optimum Dynamics toggle 18 is selected, the Class 1 δP's and Class 2 δP's values provided, therefore 156 shall be used instead of the values listed with respect to Optimum NOx 134, 152 and Optimum Power 136, 154.

As described above with respect to Fig. 8, the fuel blend ratio limits 160 are determined based on the other operational parameters of the system, such as NOx, dynamics or power. Here, the specific limits for determining whether an increase in the ratio of non-pipeline quality fuel are set forth in block 162. The limits for High and Low NOx, are based on the other limits set forth as the result of the optimum NOx and Dynamics switches 14, 16 being "On." Thus the fuel blend limits shown at 162 are within the operational envelope determined by the other operational parameters of the system.

In this particular example, the toggle switches for Optimum NOx 14 and Optimum Dynamics 18 are selected, with the switch for Optimum Power 16 left in the "Off" position. Thus, the values from Optimum NOx for High NOx and High High NOx 152 are provided. Also, because Optimum Dynamics 18 is also selected, the Dynamics values for High Class 1 δP's and High Class 2 δP's 138, 156 replace those δP's values provided with respect to Optimum NOx 134, 152. As a result, the allowable tuning limits 124 are provided as shown in block 164. These allowable tuning limits 124 correspond to those used in Fig. 4, as described above, to determine whether information from the CEMS 40 and CDMS 50 is in an alarm state or operating normally.

Fig. 10, shows a schematic for the process of incorporating a user's priorities and the "True" alarm conditions received for determining the dominant tuning concern 106. It is this tuning concern 106 which dictates all turbine operational changes the turbine controller 10 performs, as shown in Fig. 4.

First, a determination is made of all potential dominant tuning issues 142. These include, but are not limited to: combustor blowout, CO emissions, NOx emissions, Class 1 combustor dynamics (Class 1 δP's), and Class 2 combustor dynamics (Class 2 δP's). The list of potential dominant tuning issues 142 is determined by the user and programmer and may be based on a number of factors or operational criteria. By way of example, Class 1 and Class 2 combustor dynamics δP's refer to combustion dynamics occurring over specific ranges of acoustic frequencies, whereby the range of frequencies is different between Classes 1 and 2. Indeed, many combustion systems can possess different acoustic resonant frequencies corresponding to Class 1 and Class 2, and variations in these 2 dynamics classes may be mitigated utilizing different turbine operational parameter changes for each different turbine and / or combustor arrangement. It should also be noted that certain combustion systems may have none, 1, 2, or greater than 2 different "classes" (frequency ranges) of combustor dynamics which can be tuned. This disclosure utilizes a system whereby 2 different combustor dynamics classes are mentioned. However, it is fully intended that this disclosure can be broadly applied to any number of distinct dynamics frequency classes (from 0 to greater than 2).

After determination of the potential dominant tuning issues 142, these issues are ranked in order of significance 144 according to the end user's needs as well as the detrimental effects that each tuning concern can have on the environment and / or turbine performance. The relative importance of each potential dominant tuning concern can be different with each end user, and for each combustor arrangement. For example, some combustion systems will demonstrate an extreme sensitivity to combustor dynamics, such that normal daily operational parameter variations can cause a normally benign dynamics tuning concern to become catastrophic in a very short amount of time. In this case, one or both of the dominant dynamics tuning concerns (Class 1 and Class 2) may be elevated to Priority 1 (Most Important). By way of example in Fig. 7, combustor blowout is listed as the most important Dominant Tuning Concern 144. This ranking is used to determine the dominant tuning concern in the event that there are multiple alarms with equal levels of severity. This ranking of Dominant Tuning Concerns 144, from most to least important, provides the overall framework where the specific Boolean Logic Hierarchy 148 is created. For example, assuming Class 1 and Class 2 δP's combustor dynamics obey monotonic behavior relative to perturbations in system operational parameters, a High-High "HH" Class 2 δP's alarm may be more significant than High "H" Class 1 δP's alarm. Additionally, in the example given in Fig. 8 for the Boolean Logic Hierarchy 148, High "H" NOx emissions is more significant than High "H" Class 2 dynamics. This means that if both High "H" NOx and High "H" Class 2 dynamics are both "in alarm" (Logic = True), in the absence of other alarms being "True", the autotuning system will tune for High "H" NOx because it is the dominant tuning concern. Finally, it can be seen that Blowout is ranked above NOx Emissions and both are ranked above Class 1 δP's. Thus, if there were high "H" alarms returned for all three categories, Blowout would be the dominant tuning concern, followed by NOx Emissions and then Class 1 δP's. This Boolean Logic Hierarchy 148 will be what is compared to the "True" alarms 130 returned by comparing the allowable tuning limits 124 to the operational data 120, 122 as set forth above with respect to Fig. 5.

All "True" tuning alarms 130 are provided as ranked by severity (e.g. HHH above HH, etc.). The "True" tuning alarms 130 are then compared with the hard-coded Boolean Logic Hierarchy 148, in step 150 to determine which tuning will become the "True" Dominant Tuning Concern 106. This one "True" Dominant Tuning Concern 106 is now passed into the remainder of the autotuning algorithm, as detailed in Fig. 2, as the Dominant Tuning Concern 106 to be mitigated by operational changes.

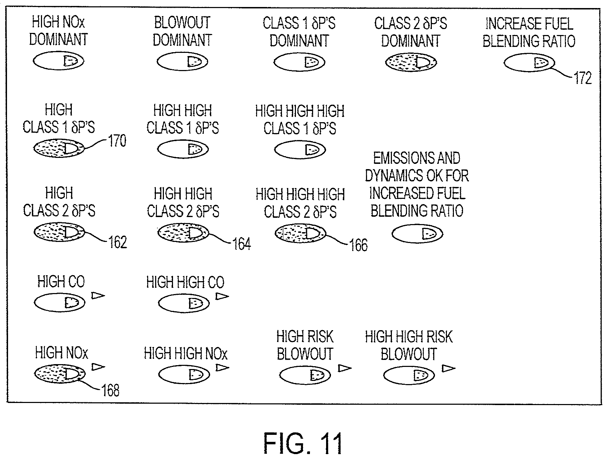

Figs. 11-15 provide exemplary graphical representations of the autotuning system interface depicting how the Boolean Logic Hierarchy works in practice. Fig. 11 shows the alarms returned in connection with the example set forth above with respect to Fig. 10. Namely, alarms are returned for Class 2 δP's at the levels of H 162, HH 164 and HHH 166. In addition, alarms for NOx 168 and Class 1 δP's 170 are returned at the H level. Since more extreme levels trump conflicts of different alarms at the same level, the HHH Class 2 δP's is the priority and therefore the dominant tuning concern 172.

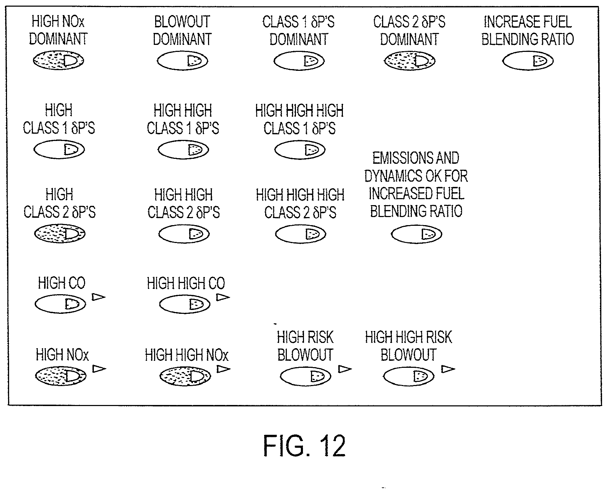

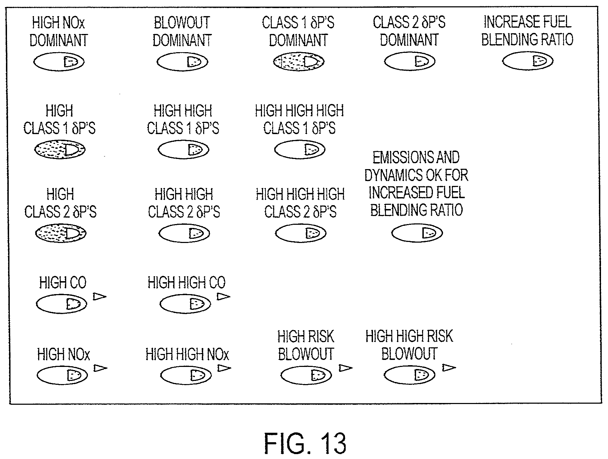

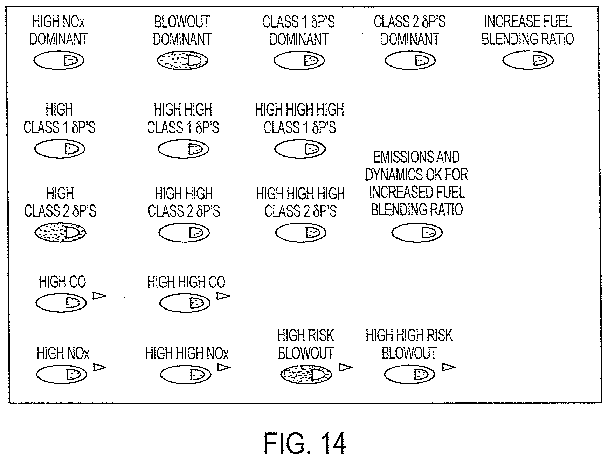

Figs. 12-14 show various further examples of the dominant tuning concern for different "True" alarm levels under the user defined hierarchy 144 of Fig. 10. Fig. 12 shows a NOx alarm at the HH level returned, with no other alarms of this severity. Thus, high NOx is the dominant tuning concern. Fig. 13 shows a Class 1 δP's at an H level as the only alarm condition, thus making Class 1 δP's as the dominant tuning concern. Finally, Fig. 14 shows that Class 2 δP's and Blowout both return alarms at the H level. Referring to the user ranking of dominant tuning issues 144 in Fig. 8, Blowout is ranked as a priority above Class 2 δP's and thus, although the severity of the alarms is equal, Blowout becomes the dominant tuning concern.

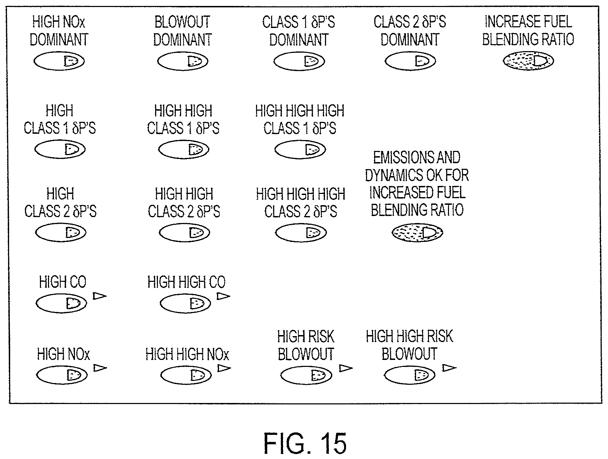

Fig. 15 shows an operational example of when an increase of the fuel blend ratio may be called for. In this case, there are no tuning limit alarms, such as those shown in Figs. 11-14. Thus, the system is operating within the operational envelope. Also, the system is operating within the operational limits where the amount of non-pipeline quality fuel may be increased, such as those shown in block 162 of Fig. 9. In such a case, the system will indicate that in increase in fuel blend ratio is called for.

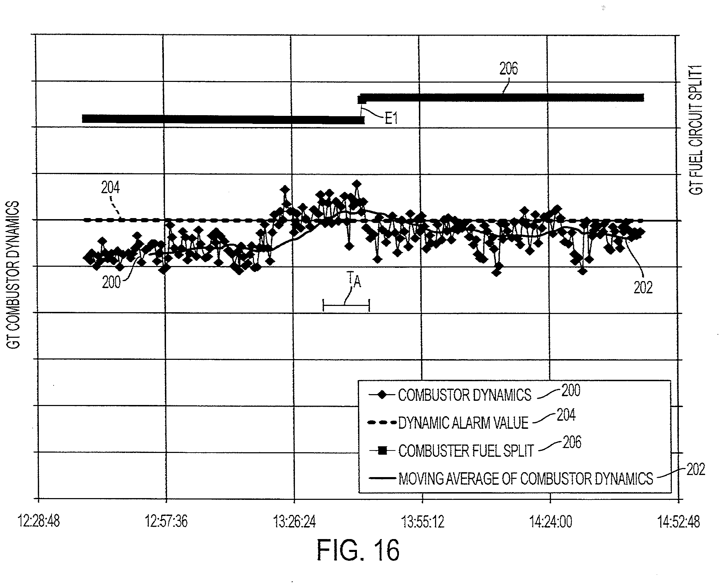

In Figs. 16 -19, there is shown various examples of the operational results of a tuning operation of a tuning controller of the present disclosure based on operational data from a running turbine system. In Fig. 16, the dominant tuning concern is high Class 2 δP's, and a change in the combustor fuel split E1 is made in reaction to a high Class 2 δP's alarm generated when the combustor dynamics moves outside of the set operational priorities for optimum dynamics. The actual combustor dynamics data received by the turbine controller 10 from, for example, the CDMS 50 is designated as 200 in the graph. The moving average for the combustor dynamics is identified in the graph as 202. When the combustor dynamics exceed the dynamics alarm limit value 204 for a set period of time TA an alarm goes off within the tuning controller. This alarm causes the first event E1 and a resulting incremental adjustment in the combustor fuel split tuning parameter 206. As illustrated, the incremental increase in the fuel split causes a corresponding drop in the combustor dynamics 200, with the average combustor dynamics 202 dropping below the dynamics alarm limit 204. As time continues, the tuning is held by the tuning controller and the average combustor dynamics 202 maintains its operational position below the dynamics limit 204. Thus, no further adjustments necessary or alarms issued.

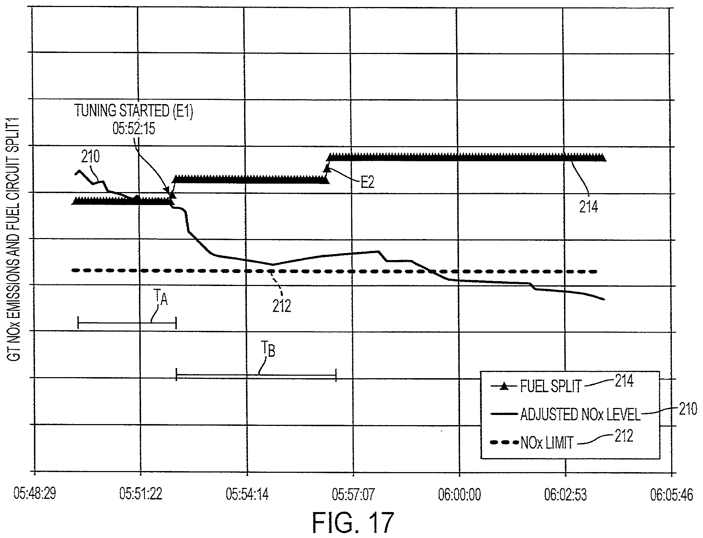

In Fig. 17, the tuning criteria is NOx emissions. As NOx emissions data 210 is received from the tuning controller, an alarm is generated after the passage of time TA. The alarm is caused by the NOx emissions 210 exceeding the operational standard or tuning limit 212. The alarm activates a first event E1 resulting in an incremental increase in the fuel split 214. After a period of time TB from the first event E1, the NOx alarm is still activated due to the NOx emissions 210 exceeding the preset tuning limit 212. This continued alarm after time TB causes a second event E2 and a second incremental increase in the fuel split value 214. This second increase is equal in magnitude to the first incremental increase. The second event E2 causes the NOx emissions level 210 to drop below the preset limit 212 within the review time period and halts the alarm. As the NOx emissions 210 remains below the limit 212, the fuel split 214 tuning is held and the operation of the turbine continues with the defined operational parameters.

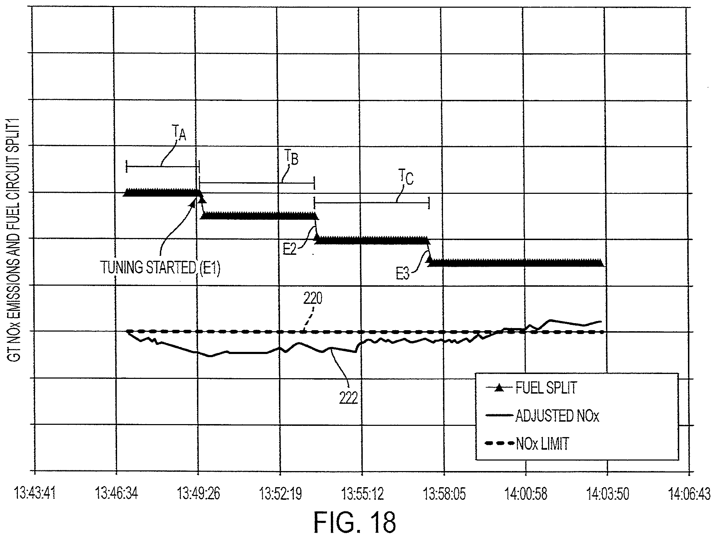

In Fig. 18, the tuning criteria is again NOx emissions, with the alarm created by a low reading received by tuning controller. As shown, the NOx tuning limit 220 is defined. Upon passage of the set time period TA from receiving NOx level data 222, the alarm is generated and a first event E1 occurs, At the first event E1, the fuel split level 224 is incrementally adjusted downward. After a set passage of time TB from event E1 additional NOx emissions data 222 is received and compared to the preset alarm level 220. Because the NOx is still below the alarm level 220, a second event E2 occurs resulting in a further incremental reduction in the fuel split value 224. A further passage of time TC from event E2 occurs and additional data is received. Again, the NOx data 212 is low, maintaining the alarm and resulting in a further event E3. At event E3, the fuel split value 224 is again reduced by the same incremental amount. This third incremental adjustment results in the NOx emissions 222 rising above the preset limit 220 and results in removal of the alarm. The fuel split 224 tuning value set after event E3 is held in place by the tuning controller 10.

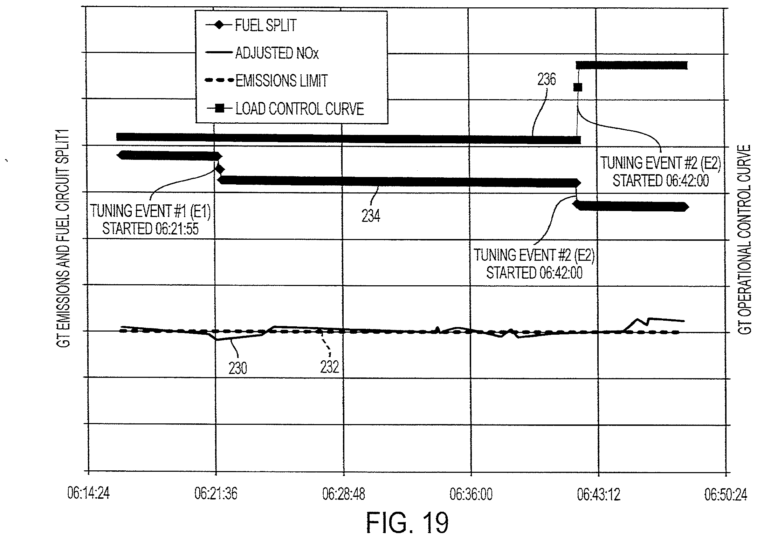

In Fig. 19, the NOx emissions data 230 received by the tuning controller 10 is again tracking along the lower emissions limit 232. At the first tuning event E1, the fuel split value 234 is incrementally dropped to result in a corresponding increase in the NOx emissions 230 over the lower limit 232. After this first incremental adjustment, the NOx emissions for a period of time holds above the limit 232 and then begins to again fall. At the second tuning event E2, the fuel split value 234 is again adjusted by the designated fixed incremental value. This second adjustment then places the fuel split value 234 at its defined minimum within the preset range of allowable values (determined as a hard coded limit within the tuning controller 10). Because this limit is reached, the tuning operation moves to the next operational parameter, which is normally the second fuel circuit adjustment. In the example provided, this second circuit value (not shown) is already at its set maximum/minimum and is therefore not adjusted. Thus, the tuning operation moves on to the next operational parameter, load control curves 236. As shown, at event E2 an incremental adjustment is made in the load control curve value 236. The increase in the load control curve value 236 results in a corresponding increase in the NOx emission 230 to a value above the minimum 232 and removes the alarm. Upon removal of the alarm, the tuning settings are held and no further adjustments are made. The tuning controller 10 then proceeds to receive data from the sensor means, through the DCS, and continues to make comparisons with the set operational standards (including the minimum NOx emissions limit EL).

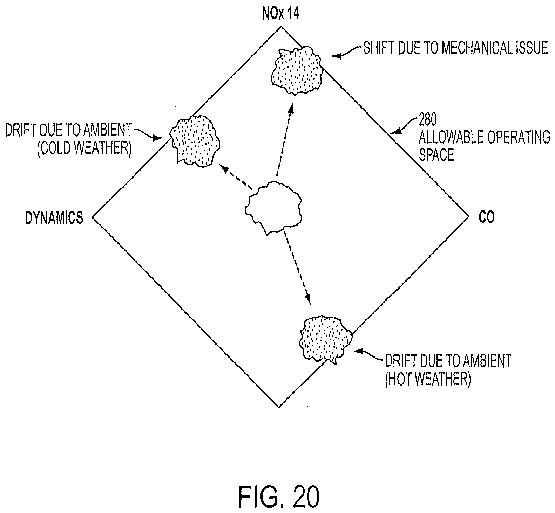

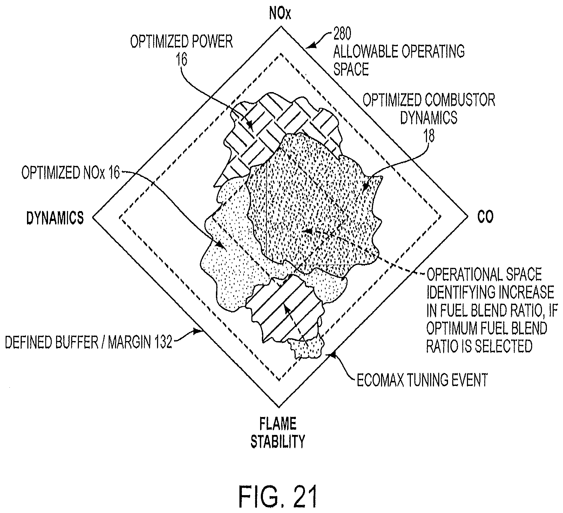

Figs. 20 and 21 are typical schematic representations of the operation of the tuning controller within contemplated disclosure. The operation of the turbine is defined by the emission output of the turbine, both NOx and CO, turbine dynamics and flame stability. In Fig. 19, a tuned system is defined by a preferred operating envelope in the center of the operational diamond. This preferred operational envelope is typically manually set based on a prior start-up or operation of the turbine system. However, weather changes, both hot and cold, and mechanical changes within the turbine system cause a drift within the operational diamond. Hence a tuning is desired so as to maintain the turbine operation within the preferred range.

Fig. 20 also provides an example image of the allowable operating space, 280 where an increase in the amount of the non-pipeline quality fuel is permissible. As described above, this operating space is within the range defined by the allowable tuning limits.

In Fig. 21, a defined buffer / margin 132 is set within the operational diamond to serve as a warning for a drift of the turbine operation outside of the preferred operational envelope. Once one of the sensed operational values reaches the defined buffer line or limit, an alarm is generated, causing a tuning event. Based on the direction of the drift, the tuning controller creates a preset reaction to meet the specifics of the tuning need. This preset reaction is a defined incremental shift in an operational parameter of the turbine as a means for moving the turbine operational envelope back into the desired range, and away from the buffer limit. Also shown on Figs. 20 and 21 are representations of the operating spaces employed by selecting the Optimum NOx 14, Optimum Power 16, and Optimum Combustor Dynamics 18 Toggle Switches of the User Interface Display 12 of Fig. 5 within the overall turbine combustor operating envelope. It should be noted that Fig. 20 does not show a pictorial representation of the Optimum Fuel Blend Ratio 19 optimization mode. This operational mode overlays "on top" of the entire combustion operating envelope with no clear bias toward any edge of operation, and as such is not shown. It should be noted that each parameter may have more than one alarm, such as high "H"; high-high "HH" and high-high-high "HHH." These alarms may be sequentially located around the diamond shown to alert operators of how close the turbine operation is to the outside of desired operational limits,

The present disclosure has been described and illustrated with respect to a number of exemplary embodiments thereof. It should be understood by those skilled in the art from the foregoing that various other changes, omissions and additions may be made therein, without departing from the scope of the present invention as defined in the appended claims.

## Claims

1. A method for automated control of a combustion turbine fuel composition through automated modification of a ratio of fuel gas, the method comprises:
providing a first fuel source;
providing a second fuel source;
supplying fuel to a combustion turbine in a blend of fuel from the first source and second source;
specifying one or more first tuning priorities, wherein the one or more first tuning priorities are selected from the group comprising NOx levels, power level and combustion dynamics, heat rate, CO levels, heat recovery steam generator life, and turndown capability, and wherein the specifying comprises selecting or de-selecting one or more first tuning priorities or selecting a numerical value for the one or more first tuning priorities and wherein the specifying operates to change a first set of predetermined operational limits;
specifying a second tuning priority, wherein the second tuning priority is fuel blend ratio, and wherein the specifying comprises selecting the second tuning priority and wherein the specifying of the second tuning priority operates to overlay a second set of predetermined operational limits within the first set of predetermined operational limits;
sensing the operational parameters (120, 122) of the gas turbine;
determining whether the operational parameters (120, 122) are within the first or second set of predetermined operational limits;
adjusting the blend of the first fuel source and the second fuel source, based on whether the operational parameters (120, 122) are within the first or second set of predetermined operational limits.

2. The method of claim 1, further comprising:
providing a hierarchy of the tuning priorities; and
setting the first or second set of predetermined operational limits based on the hierarchy of the tuning priorities.

3. The method according to claim 2, wherein providing the hierarchy of tuning priorities comprises ranking the tuning priorities.

4. The method of claim 1, further comprising:
making incremental adjustments of at least one operational element of the turbine.

5. The method of claim 4, wherein the one or more operational elements are selected from the group comprising combustor fuel distribution split within the nozzles of the combustor, fuel gas inlet temperature, and fuel/air ratio within the turbine.

6. The method according to claim 1, wherein the step of adjusting the ratio of the first fuel sources to the second fuel source comprises making incremental adjustments of at least one operational element of the turbine.

7. The method according to claim 1, further comprising producing one or more indicators (126) if the operational parameters (120, 122) are not within the first or second set of predetermined operational limits, wherein the one or more indicators (126) are ranked based on the severity of the indicator (126).

8. The method according to claim 7, wherein the one or more indicators (126) are further ranked based on the first or second set of tuning priorities, such that indicators (126) of the same magnitude are ranked based on the first or second set of tuning priorities.

9. The method according to claim 1, wherein adjusting the blend of the first fuel source and the second fuel source comprises making incremental adjustments of the ratio of the first fuel source to second fuel source.

10. The method according to claim 1, wherein the first or second predetermined operational limits are determined according to a user's operational control element for the turbine, wherein the user's operational control element include one or more tuning priorities selected from the group comprising NOx levels, power level and combustion dynamics, heat rate, CO levels, heat recovery steam generator life, gas turbine fuel blend ratio and turndown capability.

11. The method according to claim 1, wherein the operational parameters (120, 122) define an operational envelope specifying the operational limits

12. The method according to claim 1, wherein the first fuel source is pipeline quality fuel.

13. The method according to claim 1, wherein the second fuel source is non-pipeline quality fuel.

14. The method according to claim 1, wherein the blend comprises 0-100% of the first fuel source.

15. The method according to claim 1, wherein the blend comprises 0-100% of the second fuel source.

16. The method according to claim 1, wherein an amount of the second fuel source is increased in response to the operational parameters (120, 122) being within the first or second set of predetermined operational limits.

17. The method according to claim 1, wherein an amount of the first fuel source is increased in response to the operational parameters (120, 122) being outside the first or second set of predetermined operational limits.

18. The method according to claim 1, wherein fuel blend adjustments are done incrementally.

19. A tuning system for automated control of a gas turbine fuel composition through automated modification of a ratio of fuel gas, the system comprising a turbine controller (30) and a turbine, wherein the turbine controller (30) controls operational aspects of the turbine, wherein the tuning system comprises:
operational turbine controls for operational control elements of the turbine, the turbine controls controlling at least one of turbine fuel distribution or the fuel temperature,
a tuning controller (10) communicating with the controls, the tuning controller (10) configured to tune the operation of the turbine in accordance with the following:
specifying one or more first tuning priorities, wherein the one or more first tuning priorities are selected from the group comprising NOx levels, power level and combustion dynamics, heat rate, CO levels, heat recovery steam generator life, and turndown capability, and wherein the specifying comprises selecting or de-selecting one or more first tuning priorities or selecting a numerical value for the one or more first tuning priorities and wherein the specifying operates to change a first set of predetermined operational limits;
specifying a second tuning priority, wherein the second tuning priority is fuel blend ratio, and wherein the specifying comprises selecting the second tuning priority and wherein the specifying of the second tuning priority operates to overlay a second set of predetermined operational limits within the first set of predetermined operational limits
receiving operational data (120, 122) about the turbine,
providing a hierarchy of the first tuning priorities,
determining whether sensed operational data is within the first or second set of predetermined operational limits and producing one or more indicators (126) if said operational data is not within the first or second set of predetermined operational limits,
ranking the one or more indicators (126) to determine dominant tuning concern (106), and
providing a blend of fuel to a fuel blend ratio controller (70), the blend having fuel from at least one of a first and second fuel source, the fuel blend ratio controller (70) adjusting the ratio of the first fuel source and the second fuel source according to the blend based on whether the operational data (120, 122) is within the first or second set of predetermined operational limits.

20. The tuning system according to claim 19, wherein tuning the operation of the turbine comprises making incremental adjustments of at least one operational control element of the turbine.

21. The tuning system according to claim 19, further comprising at least one sensor (40, 50) for sensing at least one of combustor dynamics or turbine exhaust emissions.

22. The tuning system according to claim 19, wherein the one or more indicators (126) are ranked based on the severity of each indicator (126).

23. The tuning system according to claim 22, wherein the one or more indicators (126) are further ranked based on the first or second set of tuning priorities, such that indicators (126) of the same magnitude are ranked based on the first or second set of tuning priorities.

24. The tuning system according to claim 19, wherein providing the blend of the first fuel source and the second fuel source comprises making incremental adjustments of the ratio of the first fuel source to second fuel source.

25. The tuning system according to claim 19, wherein tuning the operation of the turbine based on dominant tuning concern (106) comprises making incremental adjustments in one or more operational control element of the turbine, wherein the one or more operational control element are selected from the group comprising combustor fuel distribution split within the nozzles of the combustor, fuel gas inlet temperature, and fuel/air ratio within the turbine.

26. The tuning system according to claim 19, wherein the one or more indicators (126) comprises one or more alarm levels indicating that the operational data of the turbine is outside of allowable limits (124) of the turbine.

27. The tuning system according to claim 19, wherein the tuning controller communicates with the operational turbine controls through a distribution control system (DCS).

28. The tuning system according to claim 19, wherein the tuning controller communicated directly with the turbine controller.

29. The tuning system according to claim 19, wherein the first fuel source is pipeline quality fuel.

30. The tuning system according to claim 19, wherein the second fuel source is non-pipeline quality fuel.

31. The tuning system according to claim 19, wherein the blend comprises 0-100% of the first fuel source.

32. The tuning system according to claim 19, wherein the blend comprises 0-100% of the second fuel source.

33. The tuning system according to claim 19, wherein an amount of the second fuel source is increased in response to the operational data being within the first or second set of predetermined operational limits.

34. The tuning system according to claim 19, wherein an amount of the first fuel source is increased in response to the operational data being outside the first or second set of predetermined operational limits.

35. The tuning system according to claim 19, wherein fuel blend adjustments are done incrementally.

## Patentansprüche

1. Verfahren zur automatisierten Steuerung einer Gasturbinen-Treibstoffzusammensetzung durch eine automatisierte Änderung eines Verhältnisses von Treibgas, wobei das Verfahren umfasst:
Vorsehen einer ersten Treibstoffquelle;
Vorsehen einer zweiten Treibstoffquelle;
Zuführen von Treibstoff zu einer Gasturbine in einem Gemisch aus Treibstoff von der ersten Quelle und der zweiten Quelle;
Festlegen einer oder mehrerer erster Abstimmungsprioritäten, wobei die eine oder die vielen ersten Abstimmungsprioritäten gewählt sind aus der Gruppe, umfassend NOx-Gehalte, Leistungsniveau und Verbrennungsdynamik, Wärmestrom, CO-Gehalte, Lebensdauer des Wärmerückgewinnungs-Dampferzeugers und Teillastfähigkeit, und wobei das Festlegen ein Wählen oder Abwählen einer oder mehrerer erster Abstimmungsprioritäten oder das Wählen eines numerischen Werts für die eine oder die vielen ersten Abstimmungsprioritäten umfasst, und wobei das Festlegen bewirkt, einen ersten Satz vorgegebener Betriebsgrenzwerte zu verändern;
Festlegen einer zweiten Abstimmungspriorität, wobei die zweite Abstimmungspriorität ein Treibstoffmischverhältnis ist, und wobei das Festlegen ein Wählen der zweiten Abstimmungspriorität umfasst, und wobei das Festlegen der zweiten Abstimmungspriorität bewirkt, einen zweiten Satz vorgegebener Betriebsgrenzwerte in dem ersten Satz vorgegebener Betriebsgrenzwerte zu überlagern;
Erfassen der Betriebsparameter (120, 122) der Gasturbine;
Bestimmen, ob die Betriebsparameter (120, 122) innerhalb des ersten oder zweiten Satzes vorgegebener Betriebsgrenzwerte liegen;
Einstellen des Gemisches der ersten Treibstoffquelle und der zweiten Treibstoffquelle auf Grundlage dessen, ob die Betriebsparameter (120, 122) innerhalb des ersten oder zweiten Satzes vorgegebener Betriebsgrenzwerte liegen.

2. Verfahren nach Anspruch 1, weiter umfassend:
Vorsehen einer Hierarchie der Abstimmungsprioritäten; und
Festlegen des ersten oder zweiten Satzes vorgegebener Betriebsgrenzwerte auf Grundlage der Hierarchie der Abstimmungsprioritäten.

3. Verfahren nach Anspruch 2, wobei das Vorsehen der Hierarchie der Abstimmungsprioritäten ein Einstufen der Abstimmungsprioritäten umfasst.

4. Verfahren nach Anspruch 1, weiter umfassend:
ein Vornehmen inkrementeller Einstellungen mindestens eines Betriebselements der Turbine.

5. Verfahren nach Anspruch 4, wobei das eine oder die vielen Betriebselemente gewählt werden aus der Gruppe, umfassend Brennkammer-Treibstoffverteilungsaufspaltung in den Düsen der Brennkammer, Treibgaseinlasstemperatur und Treibstoff-/Luft-Verhältnis in der Turbine.

6. Verfahren nach Anspruch 1, wobei der Schritt des Einstellens des Verhältnisses der ersten Treibstoffquelle zur zweiten Treibstoffquelle ein Vornehmen inkrementeller Einstellungen mindestens eines Betriebselements der Turbine umfasst.

7. Verfahren nach Anspruch 1, weiter umfassend ein Erzeugen eines oder mehrerer Indikatoren (126), wenn die Betriebsparameter (120, 122) nicht innerhalb des ersten oder zweiten Satzes vorgegebener Betriebsgrenzwerte liegen, wobei der eine oder die vielen Indikatoren (126) auf Grundlage der Schwere des Indikators (126) eingestuft werden.

8. Verfahren nach Anspruch 7, wobei der eine oder die vielen Indikatoren (126) weiter auf Grundlage des ersten oder zweiten Satzes von Abstimmungsprioritäten eingestuft werden, sodass die Indikatoren (126) derselben Größe auf Grundlage des ersten oder zweiten Satzes von Abstimmungsprioritäten eingestuft werden.

9. Verfahren nach Anspruch 1, wobei das Einstellen des Gemisches der ersten Treibstoffquelle und der zweiten Treibstoffquelle ein Vornehmen von inkrementellen Einstellungen des Verhältnisses der ersten Treibstoffquelle zur zweiten Treibstoffquelle umfasst.

10. Verfahren nach Anspruch 1, wobei der erste oder zweite Satz vorgegebener Betriebsgrenzwerte gemäß einem Benutzerbedienungssteuerungselement für die Turbine bestimmt wird, wobei das Benutzerbedienungssteuerungselement eine oder mehrere Abstimmungsprioritäten enthält, gewählt aus der Gruppe, umfassend NOx-Gehalte, Leistungsniveau und Verbrennungsdynamik, Wärmestrom, CO-Gehalte, Lebensdauer des Wärmerückgewinnungs-Dampferzeugers, Gasturbinentreibstoffmischverhältnis und Teillastfähigkeit.

11. Verfahren nach Anspruch 1, wobei die Betriebsparameter (120, 122) einen Betriebsbereich definieren, der die Betriebsgrenzen festlegt.

12. Verfahren nach Anspruch 1, wobei die erste Treibstoffquelle Treibstoff in Pipelinequalität ist.

13. Verfahren nach Anspruch 1, wobei die zweite Treibstoffquelle Treibstoff in Nicht-Pipelinequalität ist.

14. Verfahren nach Anspruch 1, wobei das Gemisch 0 bis 100 % der ersten Treibstoffquelle umfasst.

15. Verfahren nach Anspruch 1, wobei das Gemisch 0 bis 100 % der zweiten Treibstoffquelle umfasst.

16. Verfahren nach Anspruch 1, wobei ein Anteil der zweiten Treibstoffquelle erhöht wird als Reaktion darauf, dass die Betriebsparameter (120, 122) innerhalb des ersten oder zweiten Satzes vorgegebener Betriebsgrenzwerte liegen.

17. Verfahren nach Anspruch 1, wobei ein Anteil der ersten Treibstoffquelle erhöht wird als Reaktion darauf, dass die Betriebsparameter (120, 122) außerhalb des ersten oder zweiten Satzes vorgegebener Betriebsgrenzwerte liegen.

18. Verfahren nach Anspruch 1, wobei Treibstoffgemischeinstellungen inkrementell vorgenommen werden.

19. Abstimmungssystem zur automatisierten Steuerung einer Gasturbinen-Treibstoffzusammensetzung durch eine automatisierte Änderung eines Verhältnisses von Treibgas, wobei das System umfasst: eine Turbinensteuereinheit (30) und eine Turbine, wobei die Turbinensteuereinheit (30) Betriebsaspekte der Turbine steuert, wobei das Abstimmungssystem umfasst:
Turbinenbetriebssteuerungen für Betriebssteuerungselemente der Turbine, wobei die Turbinensteuerungen mindestens eine aus der Turbinentreibstoffverteilung oder der Treibstofftemperatur steuern,
eine Abstimmungssteuereinheit (10), die mit den Steuerungen kommuniziert, wobei die Abstimmungssteuereinheit (10) ausgelegt ist, den Betrieb der Turbine gemäß dem Folgenden abzustimmen:
Festlegen einer oder mehrerer erster Abstimmungsprioritäten, wobei die eine oder die vielen ersten Abstimmungsprioritäten gewählt sind aus der Gruppe, umfassend NOx-Gehalte, Leistungsniveau und Verbrennungsdynamik, Wärmestrom, CO-Gehalte, Lebensdauer des Wärmerückgewinnungs-Dampferzeugers und Teillastfähigkeit, und wobei das Festlegen ein Wählen oder Abwählen einer oder mehrerer erster Abstimmungsprioritäten oder das Wählen eines numerischen Werts für die eine oder die vielen ersten Abstimmungsprioritäten umfasst, und wobei das Festlegen bewirkt, einen ersten Satz vorgegebener Betriebsgrenzwerte zu verändern;
Festlegen einer zweiten Abstimmungspriorität, wobei die zweite Abstimmungspriorität ein Treibstoffmischverhältnis ist, und wobei das Festlegen ein Wählen der zweiten Abstimmungspriorität umfasst, und wobei das Festlegen der zweiten Abstimmungspriorität bewirkt, einen zweiten Satz vorgegebener Betriebsgrenzwerte in dem ersten Satz vorgegebener Betriebsgrenzwerte zu überlagern,
Empfangen von Betriebsdaten (120, 122) über die Turbine,
Vorsehen einer Hierarchie der ersten Abstimmungsprioritäten,
Bestimmen, ob die erfassten Betriebsdaten innerhalb des ersten oder zweiten Satzes vorgegebener Betriebsgrenzwerte liegen, und Erzeugen eines oder mehrerer Indikatoren (126), wenn die Betriebsdaten nicht innerhalb des ersten oder zweiten Satzes vorgegebener Betriebsgrenzwerte liegen,
Einstufen des einen oder der vielen Indikatoren (126), um einen dominanten Abstimmbelang (106) zu bestimmen, und
Vorsehen eines Treibstoffgemisches für eine Treibstoffmischverhältnis-Steuereinheit (70), wobei das Gemisch Treibstoff von mindestens einer aus einer ersten und zweiten Treibstoffquelle aufweist, und die Treibstoffmischverhältnis-Steuereinheit (70) das Verhältnis der ersten Treibstoffquelle und der zweiten Treibstoffquelle gemäß dem Gemisch auf Grundlage dessen einstellt, ob die Betriebsdaten (120, 122) innerhalb des ersten oder zweiten Satzes vorgegebener Betriebsgrenzwerte liegen.

20. Abstimmungssystem nach Anspruch 19, wobei das Abstimmen des Betriebs der Turbine ein Vornehmen inkrementeller Einstellungen mindestens eines Betriebssteuerelements der Turbine umfasst.

21. Abstimmungssystem nach Anspruch 19, weiter umfassend mindestens einen Aufnehmer (40, 50) zum Erfassen mindestens eines aus Brennkammerdynamik oder Turbinenabgasausstoß.

22. Abstimmungssystem nach Anspruch 19, wobei der eine oder die vielen Indikatoren (126) auf Grundlage der Schwere jedes Indikators (126) eingestuft werden.

23. Abstimmungssystem nach Anspruch 22, wobei der eine oder die vielen Indikatoren (126) weiter auf Grundlage des ersten oder zweiten Satzes von Abstimmungsprioritäten eingestuft werden, sodass die Indikatoren (126) derselben Größe auf Grundlage des ersten oder zweiten Satzes von Abstimmungsprioritäten eingestuft werden.

24. Abstimmungssystem nach Anspruch 19, wobei das Vorsehen des Gemisches der ersten Treibstoffquelle und der zweiten Treibstoffquelle ein Vornehmen von inkrementellen Einstellungen des Verhältnisses der ersten Treibstoffquelle zur zweiten Treibstoffquelle umfasst.

25. Abstimmungssystem nach Anspruch 19, wobei das Abstimmen des Betriebs der Turbine auf Grundlage eines dominanten Abstimmbelangs (106) ein Vornehmen inkrementeller Einstellungen in einem oder mehreren Betriebssteuerungselementen der Turbine umfasst, wobei das eine oder die vielen Betriebssteuerungselemente gewählt werden aus der Gruppe, umfassend Brennkammer-Treibstoffverteilungsaufspaltung in den Düsen der Brennkammer, Treibgaseinlasstemperatur und Treibstoff-/Luft-Verhältnis in der Turbine.

26. Abstimmungssystem nach Anspruch 19, wobei der eine oder die vielen Indikatoren (126) einen oder mehrere Alarmpegel umfassen, die anzeigen, dass die Betriebsdaten der Turbine außerhalb der zulässigen Grenzwerte (124) der Turbine liegen.

27. Abstimmungssystem nach Anspruch 19, wobei die Abstimmungssteuereinheit mit den Turbinenbetriebssteuerungen über ein Prozessleitsystem (PLS) kommuniziert.

28. Abstimmungssystem nach Anspruch 19, wobei die Abstimmungssteuereinheit direkt mit der Turbinensteuereinheit kommuniziert.

29. Abstimmungssystem nach Anspruch 19, wobei die erste Treibstoffquelle Treibstoff in Pipelinequalität ist.

30. Abstimmungssystem nach Anspruch 19, wobei die zweite Treibstoffquelle Treibstoff in Nicht-Pipelinequalität ist.

31. Abstimmungssystem nach Anspruch 19, wobei das Gemisch 0 bis 100 % der ersten Treibstoffquelle umfasst.

32. Abstimmungssystem nach Anspruch 19, wobei das Gemisch 0 bis 100 % der zweiten Treibstoffquelle umfasst.

33. Abstimmungssystem nach Anspruch 19, wobei ein Anteil der zweiten Treibstoffquelle erhöht wird als Reaktion darauf, dass die Betriebsdaten innerhalb des ersten oder zweiten Satzes vorgegebener Betriebsgrenzwerte liegen.

34. Abstimmungssystem nach Anspruch 19, wobei ein Anteil der ersten Treibstoffquelle erhöht wird als Reaktion darauf, dass die Betriebsdaten außerhalb des ersten oder zweiten Satzes vorgegebener Betriebsgrenzwerte liegen.

35. Abstimmungssystem nach Anspruch 19, wobei Treibstoffgemischeinstellungen inkrementell vorgenommen werden.

## Revendications

1. Procédé pour la commande automatisée de la composition du combustible d'une turbine à combustion par modification automatisée d'un rapport de gaz combustible, le procédé comprenant les étapes suivantes :
fournir une première source de combustible ;
fournir une seconde source de combustible ;
fournir un combustible à une turbine à combustion en un mélange de combustible provenant de la première source et de la seconde source ;
spécifier une ou plusieurs premières priorités de réglage, sachant que la ou les premières priorités de réglage est/sont sélectionnée(s) dans le groupe comprenant les niveaux de NOx, le niveau de puissance et la dynamique de combustion, la puissance thermique, les niveaux de CO, la durée de vie du générateur de vapeur à récupération de chaleur et la capacité de débit réduit, et sachant que la spécification comprend la sélection ou la désélection d'une ou de plusieurs premières priorités de réglage ou la sélection d'une valeur numérique pour la ou les premières priorités de réglage et sachant que la spécification a pour effet de modifier un premier ensemble de limites opérationnelles prédéterminées ;
spécifier une seconde priorité de réglage, sachant que la seconde priorité de réglage est le rapport de mélange de combustible, et sachant que la spécification comprend la sélection de la seconde priorité de réglage et sachant que la spécification de la seconde priorité de réglage a pour effet de superposer un second ensemble de limites opérationnelles prédéterminées au sein du premier ensemble de limites opérationnelles prédéterminées ;
détecter les paramètres opérationnels (120, 122) de la turbine à gaz ;
déterminer si les paramètres opérationnels (120, 122) se situent dans le premier ou le second ensemble de limites opérationnelles prédéterminées ;
ajuster le mélange de la première source de combustible et de la seconde source de combustible selon que les paramètres opérationnels (120, 122) se situent dans le premier ou le second ensemble de limites opérationnelles prédéterminées.

2. Procédé selon la revendication 1, comprenant en outre les étapes suivantes :
fournir une hiérarchie des priorités de réglage ; et
régler le premier ou le second ensemble de limites opérationnelles prédéterminées sur la base de la hiérarchie de priorités de réglage.

3. Procédé selon la revendication 2, dans lequel la fourniture de la hiérarchie de priorités de réglage comprend la classification des priorités de réglage.

4. Procédé selon la revendication 1, comprenant en outre les étapes suivantes :
procéder à des ajustements incrémentiels d'au moins un élément opérationnel de la turbine.

5. Procédé selon la revendication 4, dans lequel le ou les éléments opérationnels sont choisis dans le groupe comprenant la répartition du combustible de la chambre de combustion dans les buses de la chambre de combustion, la température d'admission du gaz combustible et le rapport combustible/air dans la turbine.

6. Procédé selon la revendication 1, dans lequel l'étape d'ajustage du rapport des premières sources de combustible à la seconde source de combustible comprend de procéder à des ajustements incrémentiels d'au moins un élément opérationnel de la turbine.

7. Procédé selon la revendication 1, comprenant en outre la production d'un ou plusieurs indicateurs (126) si les paramètres opérationnels (120, 122) ne sont pas dans le premier ou le second ensemble de limites opérationnelles prédéterminées, dans lequel le ou les indicateurs (126) sont classés sur la base de la gravité de l'indicateur (126).

8. Procédé selon la revendication 7, dans lequel le ou les indicateurs (126) sont en outre classés sur la base du premier ou du second ensemble de priorités de réglage, de sorte que des indicateurs (126) de la même grandeur sont classés sur la base du premier ou du second ensemble de priorités de réglage.

9. Procédé selon la revendication 1, dans lequel l'ajustement du mélange de la première source de combustible et de la seconde source de combustible comprend d'effectuer des ajustements incrémentiels du rapport entre la première source de combustible et la seconde source de combustible.

10. Procédé selon la revendication 1, dans lequel les premières ou les secondes limites opérationnelles prédéterminées sont déterminées en fonction d'un élément de commande opérationnel de l'utilisateur pour la turbine, dans lequel l'élément de commande opérationnel de l'utilisateur comprend une ou plusieurs priorités de réglage sélectionnées dans le groupe comprenant les niveaux de NOx, le niveau de puissance et la dynamique de combustion, la puissance thermique, les niveaux de CO, la durée de vie du générateur de vapeur à récupération de chaleur, le rapport de mélange du combustible de la turbine à gaz et la capacité de débit réduit.

11. Procédé selon la revendication 1, dansa lequel les paramètres opérationnels (120, 122) définissent une enveloppe opérationnelle spécifiant les limites opérationnelles.

12. Procédé selon la revendication 1, dans lequel la première source de combustible est un combustible de qualité pipeline.

13. Procédé selon la revendication 1, dans lequel la seconde source de combustible est un combustible qui n'est pas de qualité pipeline.

14. Procédé selon la revendication 1, dans lequel le mélange comprend 0-100 % de la première source de combustible.

15. Procédé selon la revendication 1, dans lequel le mélange comprend 0-100 % de la seconde source de combustible.

16. Procédé selon la revendication 1, dans lequel une quantité de la seconde source de combustible est augmentée en réponse aux paramètres opérationnels (120, 122) qui se trouvent dans le premier ou le second ensemble de limites opérationnelles prédéterminées.

17. Procédé selon la revendication 1, dans lequel une quantité de la première source de combustible est augmentée en réponse aux paramètres opérationnels (120, 122) qui se trouvent en dehors du premier ou du second ensemble de limites opérationnelles prédéterminées.

18. Procédé selon la revendication 1, dans lequel les ajustements du mélange de combustible sont effectués de manière incrémentielle.

19. Système de réglage pour la commande automatisée de la composition du combustible d'une turbine à gaz par modification automatisée d'un rapport de gaz combustible, le système comprenant un contrôleur (30) de turbine et une turbine, dans lequel le contrôleur (30) de turbine commande des aspects opérationnels de la turbine, dans lequel le système de réglage comprend :
des commandes de turbine opérationnelles pour les éléments de commande opérationnels de la turbine, les commandes de turbine contrôlant au moins l'un entre la distribution du combustible de turbine et la température du combustible,
un contrôleur de réglage (10) communiquant avec les commandes, le contrôleur de réglage (10) étant configuré pour régler le fonctionnement de la turbine conformément à ce qui suit :
spécifier une ou plusieurs premières priorités de réglage, sachant que la ou les premières priorités de réglage est/sont sélectionnée(s) dans le groupe comprenant les niveaux de NOx, le niveau de puissance et la dynamique de combustion, la puissance thermique, les niveaux de CO, la durée de vie du générateur de vapeur à récupération de chaleur et la capacité de débit réduit, et sachant que la spécification comprend la sélection ou la désélection d'une ou de plusieurs premières priorités de réglage ou la sélection d'une valeur numérique pour la ou les premières priorités de réglage et sachant que la spécification a pour effet de modifier un premier ensemble de limites opérationnelles prédéterminées ;
spécifier une seconde priorité de réglage, sachant que la seconde priorité de réglage est le rapport de mélange de combustible, et sachant que la spécification comprend la sélection de la seconde priorité de réglage et sachant que la spécification de la seconde priorité de réglage a pour effet de superposer un second ensemble de limites opérationnelles prédéterminées au sein du premier ensemble de limites opérationnelles prédéterminées,
recevoir des données opérationnelles (120, 122) concernant la turbine,
fournir une hiérarchie des premières priorités de réglage,
déterminer si les données opérationnelles détectées se situent dans le premier ou le second ensemble de limites opérationnelles prédéterminées et produire un ou plusieurs indicateurs (126) si lesdites données opérationnelles ne se situent pas dans le premier ou le second ensemble de limites opérationnelles prédéterminées,
classer l'unique ou les indicateur(s) (126) pour déterminer la préoccupation dominante en matière de réglage (106), et
fournir un mélange de combustible à un contrôleur (70) de rapport de mélange de combustible, le mélange contenant du combustible provenant d'au moins l'une d'une première et d'une seconde sources de combustible, le contrôleur (70) de rapport de mélange de combustible ajustant le rapport de la première source de combustible et de la seconde source de combustible en fonction du mélange selon que les données opérationnelles (120, 122) se situent dans le premier ou le second ensemble de limites opérationnelles prédéterminées.

20. Système de réglage selon la revendication 19, dans lequel le réglage du fonctionnement de la turbine comprend de procéder à des ajustements incrémentiels d'au moins un élément de commande opérationnel de la turbine.

21. Système de réglage selon la revendication 19, comprenant en outre au moins un capteur (40, 50) pour détecter au moins l'une des dynamiques de la chambre de combustion ou des émissions d'échappement de la turbine.

22. Système de réglage selon la revendication 19, dans lequel le ou les indicateurs (126) sont classés sur la base de la gravité de chaque indicateur (126).

23. Système de réglage selon la revendication 22, dans lequel le ou les indicateurs (126) sont en outre classés sur la base du premier ou du second ensemble de priorités de réglage, de sorte que des indicateurs (126) de la même grandeur sont classés sur la base du premier ou du second ensemble de priorités de réglage.

24. Système de réglage selon la revendication 19, dans lequel la fourniture du mélange de la première source de combustible et de la seconde source de combustible comprend d'effectuer des ajustements incrémentiels du rapport entre la première source de combustible et la seconde source de combustible.

25. Système de réglage selon la revendication 19, dans lequel le réglage du fonctionnement de la turbine sur la base de la la préoccupation dominante (106) en matière de réglage comprend d'effectuer des ajustements incrémentiels dans un ou plusieurs éléments de commande opérationnels de la turbine, sachant que le ou les éléments de commande opérationnels sont choisis dans le groupe comprenant la répartition du combustible de la chambre de combustion dans les buses de la chambre de combustion, la température d'admission du gaz combustible et le rapport combustible/air dans la turbine.

26. Système de réglage selon la revendication 19, dans lequel le ou les indicateurs (126) comprennent un ou plusieurs niveaux d'alarme indiquant que les données opérationnelles de la turbine sont en dehors des limites admissibles (124) de la turbine.

27. Système de réglage selon la revendication 19, dans lequel le contrôleur de réglage communique avec les commandes de turbine opérationnelles par le biais d'un système de contrôle de distribution (DCS).

28. Système de réglage selon la revendication 19, dans lequel le contrôleur de réglage communique directement avec le contrôleur de turbine.

29. Système de réglage selon la revendication 19, dans lequel la première source de combustible est un combustible de qualité pipeline.

30. Système de réglage selon la revendication 19, dans lequel la seconde source de combustible est un combustible qui n'est pas de qualité pipeline.

31. Système de réglage selon la revendication 19, dans lequel le mélange comprend 0-100 % de la première source de combustible.

32. Système de réglage selon la revendication 19, dans lequel le mélange comprend 0-100 % de la seconde source de combustible.

33. Système de réglage selon la revendication 19, dans lequel une quantité de la seconde source de combustible est augmentée en réponse aux données opérationnelles qui se trouvent dans le premier ou le second ensemble de limites opérationnelles prédéterminées.

34. Système de réglage selon la revendication 19, dans lequel une quantité de la première source de combustible est augmentée en réponse aux données opérationnelles qui se trouvent en dehors du premier ou du second ensemble de limites opérationnelles prédéterminées.

35. Système de réglage selon la revendication 19, dans lequel les ajustements du mélange de combustible sont effectués de manière incrémentielle.
